# EUROPEAN PATENT APPLICATION

(11) **EP 4 835 024 A1**
(43) Date of publication of application: **04.11.2026**
(21) Application number: 24912952.9
(22) Date of filing: 25.12.2024
(51) Int. Cl.: C09D 201/00, B01D 19/04, C09D 5/02, C09D 7/63, C09D 7/65

(54) **SURFACE CONDITIONER, AQUEOUS COATING COMPOSITION, ARTICLE, AND METHOD FOR FORMING MULTILAYER COATING FILM**

(30) Priority: 26.12.2023 JP 2023220035
(71) Applicant: Kusumoto Chemicals, Ltd., Tokyo 101-0047 (JP)
(72) Inventor: OIWA, Yasuhiro, Soka-shi, Saitama 340-0004 (JP); OGIWARA, Shunsuke, Soka-shi, Saitama 340-0004 (JP)
(74) Representative: Hasegawa, Kan
(86) International application number: PCT/JP2024/046034
(87) International publication number: WO 2025/143066

(57) **Abstract**

Provided are a surface control agent capable of preventing popping that occurs when a multilayer coating film is formed by a wet-on-wet process and not impairing overcoatability, an aqueous paint composition containing the surface control agent, an article coated with a coating agent containing the surface control agent, and a method for forming a multilayer coating film using an aqueous paint containing the surface control agent.

A surface control agent for aqueous paints contains: a polymer (A) having an SP value of 6 to 12 and a weight-average molecular weight of 200 to 1,000,000 and having at least three repeating units; and organic solid fine particles (B) which are in a solid state in the surface control agent at 25°C.

## Description

### [Technical Field]

The present invention relates to surface control agents, aqueous paint compositions, articles, and methods for forming multilayer coating films.

### [Background Art]

In the coating process for automobile bodies or the like, a multilayer coating film is typically formed by applying a primer coat (for example, electrodeposition coating), a first coat, a second coat, and, if necessary, a clear coat to the object to be coated in order to provide corrosion resistance and design. As a method for forming a multilayer coating film on automobile bodies, for example, a method for forming a multilayer coating film by a 3-coat 2-bake (3C2B) method is widely used, which involves forming a primer coating film on the object to be coated, applying a first paint, baking and curing, applying a second paint, applying a clear paint, and baking and curing in sequence.

On the other hand, in recent years, for the purpose of CO₂ reduction and energy saving, a 3-coat 1-bake (3C1B) method has been studied, in which the baking and curing after the application of the first paint are omitted, and application of the first paint, preheating, application of the second paint, preheating, application of the clear paint, and baking and curing are performed in sequence. That is, this is a method of forming a multilayer coating film by a wet-on-wet process, in which the paint for the upper layer is sequentially applied without curing the coating film at each application stage, and multiple layers are baked and cured simultaneously.

Further, in recent years, from the viewpoint of environmental issues and health impacts, there have been efforts to replace solvent-based paints with aqueous paints in order to reduce volatile organic compounds (VOC). Also in the coating of automobile bodies, from the viewpoint of VOC reduction, there is a growing trend to use aqueous paints for the first paint and the second paint, and in particular, the 3C1B method requires the use of aqueous paints as the first and second paints.

To provide aqueous paints, it is necessary to increase the water solubility and dispersibility of the resin that forms a coating film, and methods for achieving this include polarizing the resin by introducing hydrophilic groups into the resin, or adding surfactants. However, aqueous paints containing polarized resins or surfactants tend to foam easily and air bubbles are easily stabilized, which poses a problem. Therefore, in the aqueous paints, it is important to prevent entrapment of air bubbles during production and application of paints, thereby preventing air bubbles from remaining in the dried coating film and preventing occurrence of coating defects such as popping. Various surface control agents for aqueous paints have been proposed as additives to prevent entrapment of air bubbles during production and application of paints.

For example, PTL 1 discloses an anti-popping agent for water-based coatings, which is added to the water-based coatings to prevent occurrence of bubbles (popping) during baking, the anti-popping agent containing a copolymer of an ether group-containing alkyl (meth)acrylate monomer (A) and an (ether group-free) alkyl (meth)acrylate monomer (B). Further, PTL 2 discloses a defoaming agent for water-based coatings, which is obtained by dissolving polyoxyethylene hydrogenated castor oil triisostearate and one or more selected from the group consisting of poly(alkyl vinyl ether), polybutadiene, polybutene and polyisoprene in a specific hydrophobic solvent.

Furthermore, PTL 3 discloses a defoaming agent composition including an organic acid ester-modified organopolysiloxane having a specific structure and fine powder silica, as a silicone-based defoaming agent. This defoaming agent composition is said to have high defoaming performance, dispersibility and paintability for various coating solutions.

### [Citation List]

### [Patent Literature]

PTL 1: JP 2010-100796 A
PTL 2: JP 2010-075779 A
PTL 3: JP 2010-279889 A

### [Summary of Invention]

### [Technical Problem]

However, when forming a multilayer coating film by a wet-on-wet process, not only bubbles generated during production and application of the first and second paints, but also bubbles (trapped bubbles) generated due to air entrapment during production and application of the first and second paints, may remain in an uncured multilayer coating film, and "popping" caused by the trapped bubbles remaining in the uncured multilayer coating film may occur during baking and curing. To date, no studies have been made from the perspective of preventing the occurrence of "popping" caused by trapped bubbles in such multilayer coating films. Therefore, the inventors of the present invention focused on the issue of "preventing the occurrence of popping caused by not only bubbles trapped during production and application of the first and second paints when forming a multilayer coating film by a wet-on-wet process, but also bubbles trapped in an uncured multilayer coating film", and examined means to solve this problem.

PTLs 1 and 2 address the prevention of popping in single-layer coating films, but do not address the issue of preventing the occurrence of popping in multilayer coating films caused by trapped bubbles during production and application of the first and second paints when forming a multilayer coating film by a wet-on-wet process. Further, PTL 3 evaluates only the defoaming properties, dispersibility and paintability of the defoaming agent composition, but does not address the issue of preventing the occurrence of popping in multilayer coating films caused by trapped bubbles during production and application of the first and second paints when forming a multilayer coating film by a wet-on-wet process, as in PTLs 1 and 2.

In general, silicone-based defoaming agents, such as those described in PTL 3, are excellent in foam-breaking properties due to their extremely low surface tension, but the silicone component bleeds onto a surface of the coating film, causing cissing or impairing overcoatability. These adverse effects may not be observed in laboratory-scale tests or in actual coating processes in the short term, but even in such cases, a single problem can lead to significant losses in mass-production. For this reason, the blending of silicone-based materials in coatings is often avoided, especially in cases where high-quality appearance is important, in coating systems involving multilayer coating films and large coating systems such as line coating, and the use of silicone-based defoaming agents is also avoided in surface control agents.

Therefore, the present invention has been made in view of the above circumstances, and aims to provide a surface control agent which can prevent bubble entrapment during production and application of paints and prevent popping that occurs when forming a multilayer coating film by a wet-on-wet process, and which does not impair overcoatability; an aqueous paint composition containing the surface control agent; an article coated with a coating agent containing the surface control agent; and a method for forming a multilayer coating film using an aqueous paint containing the surface control agent.

### [Solution to Problem]

As a result of intensive research to solve the above problems, the present inventors have found that a surface control agent for aqueous paints containing, as components of the surface control agent, a polymer having an SP value and a weight-average molecular weight within specific ranges and having at least three repeating units, and organic solid fine particles, can prevent popping that occurs when forming a multilayer coating film by a wet-on-wet process without impairing overcoatability. The present invention has been made based on these findings.

Specifically, the present invention is a surface control agent for aqueous paints, the surface control agent comprising: a polymer (A) having an SP value of 6 to 12 and a weight-average molecular weight of 200 to 1,000,000 and having at least three repeating units; and organic solid fine particles (B) which are in a solid state in the surface control agent at 25°C.

In one embodiment of the present invention, the polymer (A) may be one or more polymers selected from the group consisting of poly(alkyl vinyl ether), polybutadienes, polybutenes, polyalphaolefins, polyalkyl (meth)acrylates, dibasic acid ester copolymers, poly(fatty acid vinyl esters), polyalkylene glycols and derivatives thereof, polyamides, polyglycerol fatty acid esters, and polyesters.

In another embodiment of the present invention, the organic solid fine particles (B) may be one or more solid fine particles selected from the group consisting of amide, urea, polyethylene, oxidized polyethylene, acid-modified polyethylene, ethylene vinyl acetate copolymer, ethylene (meth)acrylic acid copolymer, polypropylene, acid-modified polypropylene, and hydrogenated castor oil. In this case, the amide may be a fatty acid diamide obtained by reacting fatty acids with diamines, the fatty acids being selected from the group consisting of alkyl fatty acids and hydroxy fatty acids and including at least one hydroxy fatty acid, the diamines including one or more diamines selected from the group consisting of alkylenediamines having 2 to 6 carbon atoms and m-xylylenediamine.

In still another embodiment of the present invention, the crystals of the organic solid fine particles (B) may have an aspect ratio of 1.1 to 100.

In still another embodiment of the present invention, the organic solid fine particles (B) may have a mode diameter of 0.1 µm to 150 µm.

In still another embodiment of the present invention, the surface control agent may further comprise an organic medium (C), other than water, that is liquid at 25°C, and the organic medium (C) may have 0 to 2 repeating units. In this case, the organic medium (C) may be one or more organic media selected from the group consisting of hydrocarbon oils, alcohols, glycol ethers, glycol esters and polyhydric alcohol fatty acid esters.

The present invention according to another aspect is an aqueous paint composition comprising the above-described surface control agent and an aqueous resin.

The present invention according to still another aspect is an article coated with a coating agent containing the above-described surface control agent.

The present invention according to still another aspect is a method for forming a multilayer coating film, the method comprising a film-formation step in which two or more aqueous paints are sequentially applied to a surface of an object to be coated by a wet-on-wet process, and then the aqueous paints applied to the object to be coated are simultaneously heated and cured to thereby form two or more coating films, wherein at least one of the two or more aqueous paints contains the above-described surface control agent.

In one embodiment of the present invention, a first aqueous paint containing a coloring pigment and a second aqueous paint containing a luster pigment may be used as the two or more aqueous paints, at least one of the first aqueous paint and the second aqueous paint may contain the surface control agent, and, in the film-formation step, the first aqueous paint, the second aqueous paint and a clear paint may be sequentially applied by a wet-on-wet process, and then the first aqueous paint, the second aqueous paint and the clear paint may be simultaneously heated and cured to thereby form, on a surface of the object to be coated, a first aqueous resin coating film, a second aqueous resin coating film and a clear coating film laminated in this order from the side of the object to be coated.

### [Advantageous Effects of Invention]

According to the present invention, it is possible to provide a surface control agent containing a specific polymer and organic solid fine particles as components of the surface control agent, which is capable of preventing popping that occurs when forming a multilayer coating film by a wet-on-wet process, without impairing overcoatability when forming a multilayer coating film; an aqueous paint composition containing the surface control agent; an article coated with a coating agent containing the surface control agent; and a method for forming a multilayer coating film using an aqueous paint containing the surface control agent.

### [Description of Embodiments]

In the following description, preferred embodiments of the present invention will be described in detail.

### [Surface Control Agent]

A surface control agent according to the present invention is an additive that, in aqueous paints containing a large amount of water, a polarized resin, various surfactants, and the like, functions as a defoaming agent for suppressing generation of bubbles during production and application of the paints, and/or functions as an anti-popping agent to prevent bubbles remaining in an uncured multilayer coating film from appearing as popping in the coating film during heat curing. Further, a surface control agent of the present invention contains, as essential components, a polymer (A) having an SP value and a weight-average molecular weight within specific ranges and having at least three repeating units, and organic solid fine particles (B). According to the present invention, it is possible to provide a surface control agent for aqueous paints, which can prevent popping that occurs when forming a multilayer coating film by a wet-on-wet process, and which does not impair overcoatability when forming a multilayer coating film. Further, when applying a topcoat paint, such as a clear paint, in addition to a first paint and a second paint by a wet-on-wet process and simultaneously baking and curing, or when recoating a multilayer coating film for repair or the like after curing, the surface control agent of the present invention contained in the first paint or the second paint can prevent defects such as cissing and deterioration of smoothness from occurring in a coating film such as a topcoat or a recoat. In particular, for a clear paint which serves as a topcoat, there is a trend to minimize the use of organic solvents (by increasing the solid content) from the viewpoint of VOC reduction. When the paints become high-solids, the hydroxyl value increases and thus the polarity increases, which tends to reduce the wettability to materials. When wettability deteriorates, the paint becomes more susceptible to the effects of cissing substances present in the second paint, making it more prone to coating defects such as cissing. In such a case, even if the first paint or the second paint contains the surface control agent of the present invention, the surface control agent has the effect of preventing deterioration of the wettability to a coating film onto which the clear paint is applied, thus preventing defects such as cissing and deterioration of smoothness from occurring.

The term "anti-popping properties" as used in the present invention refers to the ability to prevent "popping" that occurs during baking and curing when, in forming a multilayer coating film by a wet-on-wet process, not only bubbles generated during production and application of the first and second paints but also bubbles (trapped bubbles) generated due to air entrapment during production and application of the first and second paints remain in an uncured multilayer coating film. Further, the term "overcoatability" as used in the present invention refers to either or both of the ability to apply a paint without causing cissing or the like when applying a paint to form a coating film (hereinafter, also referred to as an "upper coating film") to a surface of an already applied coating film (hereinafter, also referred to as a "lower coating film") in a coating system formed of multiple layers, and the ability to avoid problems such as delamination between the upper coating film and the lower coating film.

### (Polymer (A))

The polymer (A) according to the present invention is a component for exhibiting defoaming properties and anti-popping properties, and is added to enhance permeability of the surface control agent into the foam lamella. The polymer (A) that can be used is a polymer having an SP value of 6 to 12 and a weight-average molecular weight of 200 to 1,000,000 and having at least three repeating units. The polymer (A) according to the present invention may be a polymer having an SP value of 6 to 12 and a weight-average molecular weight of 200 to 1,000,000 and having at least three repeating units derived from a monomer used as a raw material in synthesis of the polymer. That is, the polymer (A) of the present invention includes not only polymers which are general high-molecular weight compounds but also trimers, oligomers, and the like.

As the polymer (A), a polymer which has a liquid or rubber-like form or which is solid at 25°C but is in a liquid state in a liquid medium contained in the composition at 25°C and does not exist in a solid state (that is, which does not exist as fine particles in the surface control agent) is selected. A polymer having a liquid form can be used alone, and a polymer having a rubber or solid form may be used after being dissolved in a liquid component.

### <SP Value, Weight-Average Molecular Weight>

The SP value of the polymer (A) according to the present invention is in the range of 6 to 12. When the SP value is less than 6, there is a risk of defects in the appearance of coating film, such as cissing and seeding. On the other hand, when the SP value exceeds 12, the defoaming effect is poor, and satisfactory defoaming properties and anti-popping properties may not be achieved. In order to further enhance the defoaming properties and anti-popping properties, the SP value is preferably 7.5 to 10.5, more preferably 8.0 to 10.0, even more preferably 8.0 to 9.5, and still even more preferably 8.5 to 9.5.

In the present invention, the SP value is calculated by the Fedors method, and the unit is (cal/cm³)^{1/2}. The Fedors method is a method for estimating the SP value from the molecular structure, and the SP value can be estimated from the relationship between the cohesive energy per atomic group (cal/mol) and the molar molecular volume (cm³/mol).

Further, the weight-average molecular weight of the polymer (A) of the present invention is in the range of 200 to 1,000,000. When the weight-average molecular weight is less than 200, sufficient defoaming properties and anti-popping properties cannot be exhibited. On the other hand, when the weight-average molecular weight exceeds 1,000,000, it is difficult to uniformly disperse the polymer (A) in the paint, which may cause problems such as cissing and cratering. In order to further enhance defoaming properties and anti-popping properties, the weight-average molecular weight is preferably 250 to 1,000,000, more preferably 300 to 300,000, and even more preferably 400 to 20,000.

The weight-average molecular weight in the present invention is a value calculated relative to a molecular weight of standard polystyrene in a chromatogram measured by gel permeation chromatography (GPC).

### <Specific Examples>

The polymer (A) according to the present invention is a polymer having the above-mentioned SP value and weight-average molecular weight and having at least three repeating units. The term "polymer having at least three repeating units" refers to a compound having a monomer unit as a repeating unit and a degree of polymerization of 3 or greater, or a derivative thereof. As the polymer (A), for example, one or more polymers selected from the group consisting of poly(alkyl vinyl ether), polybutadienes, polybutenes, polyalphaolefins, polyalkyl (meth)acrylates, dibasic acid ester copolymers, poly(fatty acid vinyl esters), polyalkylene glycols and derivatives thereof, polyamides, polyglycerol fatty acid esters and polyesters can be suitably used.

The above poly(alkyl vinyl ether) can be obtained by polymerizing a vinyl ether monomer having an alkyl group with 1 to 18 carbon atoms. Examples of the vinyl ether monomer include methyl vinyl ether, ethyl vinyl ether, n-propyl vinyl ether, isopropyl vinyl ether, n-butyl vinyl ether, isobutyl vinyl ether, tert-butyl vinyl ether, hexyl vinyl ether, n-octyl vinyl ether, 2-ethylhexyl vinyl ether, isononyl vinyl ether, dodecyl vinyl ether, tetradecyl vinyl ether, hexadecyl vinyl ether and octadecyl vinyl ether, and one or more of these monomers may be arbitrarily selected and used.

The polybutadienes that can be used include homopolymers and copolymers of 1,3-butadiene (CH₂=CH-CH=CH₂) or 1,2-butadiene (CH₂=C=CH-CH₃). Further, commercially available polybutadienes may also be used. The commercially available polybutadienes include homopolymers, hydrogenated type, terminal carboxylic acid group type, terminal hydroxyl group type, and the like. One or more of these polymers can be arbitrarily selected and used.

The polybutenes that can be used include homopolymers of 1-butene and copolymers of 1-butene and isobutene. Further, commercially available polybutenes may also be used. The commercially available polybutenes include copolymers of 1-butene and isobutene, homopolymers of 1-butene, hydrogenated type, and the like. One or more of these polymers can be arbitrarily selected and used.

Examples of the polyalphaolefins include poly(1-hexene), poly(1-octene), poly(1-decene), poly(1-dodecene) and ethylene-propylene copolymers, and one or more of these can be arbitrarily selected and used.

Examples of the polyalkyl (meth)acrylates include polymers and copolymers of methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, hexyl (meth)acrylate, n-octyl (meth)acrylate, isooctyl (meth)acrylate, 2-ethylhexyl (meth)acrylate, isononyl (meth)acrylate, n-decyl (meth)acrylate, isodecyl (meth)acrylate, lauryl (meth)acrylate, stearyl (meth)acrylate, isostearyl (meth)acrylate, oleyl (meth)acrylate, behenyl (meth)acrylate, benzyl (meth)acrylate, cyclohexyl (meth)acrylate and isobornyl (meth)acrylate.

Examples of the copolymers of dibasic acid esters include polymers and copolymers of monoesters or diesters of maleic acid, and polymers and copolymers of monoesters or diesters of fumaric acid.

Examples of the poly(fatty acid vinyl esters) include polymers and copolymers of fatty acid vinyl esters (monomers) such as vinyl acetate, vinyl pivalate, vinyl propionate, vinyl butyrate, vinyl caproate, vinyl caprylate, vinyl caprate, vinyl laurate, vinyl palmitate, vinyl octylate, vinyl 2,2-dimethyloctanoate, vinyl neononanoate, vinyl neodecanoate and vinyl neoundecanoate.

Examples of the polyalkylene glycols and derivatives thereof include polypropylene glycols, polybutylene glycols, polyethylene glycol-propylene glycol, polypropylene glycol monobutyl ethers, alkylene oxide addition derivatives of hydrogenated castor oil, polypropylene glycols added to polyhydric alcohols such as glycerin, trimethylolpropane and sugars, polybutylene glycol adducts, polypropylene glycol adducts of polyamides, and the like.

In addition to those described above, examples of the polyalkylene glycol derivatives that can be used include polyoxyalkylene aliphatic ethers, polyoxyalkylene aromatic ethers, polyoxyalkylene fatty acid esters, polyoxyalkylene polyhydric alcohol ethers, polyoxyalkylene alkylamides, polyoxyethylene-polyoxypropylene block copolymers and polyoxyethylene-polyoxypropylene-polyoxyethylene block copolymers.

Examples of the polyoxyalkylene aliphatic ethers include polyoxypropylene aliphatic ethers, polyoxyethylene aliphatic ethers, polyoxyethylene-polyoxypropylene aliphatic ethers, and the like. Examples of the polyoxyalkylene aromatic ethers include polyoxypropylene aromatic ethers, polyoxyethylene aromatic ethers, polyoxyethylene-polyoxypropylene aromatic ethers, and the like. Examples of the polyoxyalkylene fatty acid esters include polyoxypropylene fatty acid esters, polyoxyethylene fatty acid esters, polyoxyethylene-polyoxypropylene fatty acid esters, and the like. Examples of the polyoxyalkylene polyhydric alcohol ethers include those obtained by adding alkylene oxides such as ethylene oxide, propylene oxide and butylene oxide to polyhydric alcohols such as glycerin, polyglycerin, trimethylolpropane, pentaerythritol, monosaccharides, disaccharides, trisaccharides, oligosaccharides, polysaccharides, sorbitol and sorbitan having a glucose or fructose skeleton. Examples of the polyoxyethylene-polyoxypropylene block copolymers or the polyoxyethylene-polyoxypropylene-polyoxyethylene block copolymers that can be used include those in which the total mass of ethylene oxide blocks in the copolymer molecule is 10 mass% to 50 mass% and preferably 10 mass% to 20 mass%, and the weight-average molecular weight of propylene oxide block is 700 to 4,000 and preferably 3,000 to 4,000. In the above range, a liquid type block copolymer is more desirable.

Further, the polyalkylene glycol derivatives that can be used include copolymers of polyalkylene glycol (meth)acrylates and fatty acid vinyl esters. Examples of the copolymers include copolymers composed of a combination of a polyalkylene glycol (meth)acrylate, such as methoxy polyethylene glycol (meth)acrylate, stearoxy polyethylene glycol (meth)acrylate, nonylphenoxy polypropylene glycol (meth)acrylate, polyethylene glycol (meth)acrylate, polypropylene glycol (meth)acrylate, polyethylene glycol propylene glycol (meth)acrylate, polyethylene glycol di(meth)acrylate, polypropylene glycol di(meth)acrylate and polyethylene glycol propylene glycol di(meth)acrylate, and the above-mentioned fatty acid vinyl ester.

The polyamides that can be used include polymers obtained by dehydration condensation of polycarboxylic acids and polyamines. Among the polycarboxylic acids, examples of dicarboxylic acids that can be used include dicarboxylic acids having 4 to 44 carbon atoms, and examples of such dicarboxylic acids include succinic acid, glutaric acid, adipic acid, pimelic acid, suberic acid, azelaic acid, sebacic acid, dodecanedioic acid, maleic acid, fumaric acid, phthalic acid, isophthalic acid, terephthalic acid and dimer acids. Dimer acids are polymerized fatty acids obtained by polymerizing (dimerizing) unsaturated fatty acids (for example, unsaturated fatty acids having 18 or 22 carbon atoms) obtained from vegetable oils such as soybean oil, tall oil, linseed oil, cottonseed oil, or the like, and typically, dimer acids having 36 or 44 carbon atoms are commercially available. Examples of tricarboxylic acids that can be used include tricarboxylic acids having 4 to 54 carbon atoms, and examples of such tricarboxylic acids include trimer acids and trimesic acids. Trimer acids are polymerized fatty acids obtained based on dimer acids by increasing the trimer acid content by distillation purification or the like, and typically, trimer acids having 54 carbon atoms are commercially available. Among the polyamines, examples of diamines that can be used include diamines having 2 to 54 carbon atoms, such as aliphatic diamines such as 1,2-diaminoethane (ethylenediamine: EDA), 1,2-diaminopropane (propylenediamine: PDA), 1,4-diaminobutane (tetramethylenediamine: TMDA), 1,6-diaminohexane (hexamethylenediamine: HMDA), 1,8-diaminooctane (octamethylenediamine: OMDA), trimethylhexamethylenediamine, and 1,12-diaminododecane (dodecamethylenediamine: DMDA); aromatic diamines such as o-xylylenediamine, m-xylylenediamine (MXDA), p-xylylenediamine (PXDA), diaminodiphenylmethane, diaminodiphenyl ether, diaminodiphenyl sulfone and methylenebis(chloroaniline); and alicyclic diamines such as piperazine, isophorone diamine and 1,3-bisaminomethylcyclohexane. Examples of triamines that can be used include triamines having 2 to 54 carbon atoms, such as aliphatic triamines such as diethylene triamine. Further, as the amines used in synthesis of the amide of the present invention, diamines or triamines derived from polymerized fatty acids, which are polymerized fatty acid derivatives, can also be used. Examples of such polymerized fatty acid derivatives include dimer diamines (DDA), which are dimer acid derivatives, and trimer triamines (TTA), which are trimer acid derivatives. The dimer diamines are dimer acid derivatives in which two terminal carboxyl groups of the above-mentioned dimer acids are substituted with primary aminomethyl groups or amino groups, and commercially available products can be used. The trimer triamines are trimer acid derivatives in which three terminal carboxyl groups of the above-mentioned trimer acids are substituted with primary aminomethyl groups or amino groups, and commercially available products can be used.

Examples of the polyglycerol fatty acid esters include polyglycerin caprylic acid esters, polyglycerin 2-ethylhexanoic acid esters, polyglycerin capric acid esters, polyglycerin lauric acid esters, polyglycerin myristic acid esters, polyglycerin stearic acid esters, polyglycerin oleic acid esters, polyglycerin isostearic acid esters, polyglycerin behenic acid esters and polyglycerin condensed ricinoleic acid esters, and one or more of these can be arbitrarily selected and used.

Examples of the polyesters include condensed polymers of hydroxy fatty acids, and condensed polymers of polymerized fatty acids such as dimer acids and diols.

Among the specific examples described above, polyalkylene glycols and derivatives thereof, polyalkyl acrylates, poly(alkyl vinyl ether), polybutene, polyglycerol fatty acid esters, and the like are preferably used in order to enhance the anti-popping properties and overcoatability.

### <Content>

The content of the above polymer (A) is preferably 10 mass% to 99.9 mass% when the total mass of all components in the surface control agent is 100 mass%. When the content of the polymer (A) is 10 mass% to 99.9 mass%, sufficient defoaming properties and anti-popping properties can be exhibited. In order to further enhance the defoaming properties and anti-popping properties, the content of the polymer (A) is more preferably 20 mass% to 70 mass%.

### (Organic Solid Fine Particles (B))

The organic solid fine particles (B) according to the present invention are components for exhibiting defoaming properties and anti-popping properties, and are added to enhance the foam-breaking effect of the surface control agent and to enhance the anti-popping properties. The organic solid fine particles (B) are selected at least from materials having a melting point of 50°C or higher, and are solid fine particles at 25°C. Such organic solid fine particles (B) are in a solid state in a liquid medium contained in the composition at 25°C. Further, the organic solid fine particles (B) are selected from those which do not dissolve in the surface control agent at 25°C and do not change the shape of the primary particles.

The term "primary particles" as used in the present invention refers to isolated particles that cannot be divided into smaller particles after dilution with a specific medium. Further, whether the organic solid fine particles (B) are in a solid state in the liquid medium contained in the surface control agent at 25°C can be determined by a known qualitative method. For example, a method can be used in which, after dispersing the organic solid fine particles in an amount not exceeding 50 mass% in a liquid medium contained in the composition, the dispersion liquid is filtered or centrifuged to separate non-fluidic components, and their melting points are measured.

### <Particle Shape>

The organic solid fine particles (B) are solid fine particles composed of an organic compound. Further, when the particle size distribution is measured by a laser diffraction and scattering measurement method or the like, the particle size preferably has a peak in the range of 0.1 µm to 150 µm. That is, the peak particle size (also referred to as a "mode diameter") of the organic solid fine particles (B) is preferably in the range of 0.1 µm to 150 µm, more preferably 2 µm to 150 µm, and even more preferably 2 µm to 50 µm. The peak particle size of the organic solid fine particles (B) within the above range can provide a surface control agent which is particularly excellent in anti-popping properties.

The particles preferably have asperities on the surface rather than a perfect spherical shape, and porous particles and particles having spiny projections are more preferred. Such particles may be, for example, clusters of fine particles whose primary particles have an aspect ratio of 1.1 to 100. In particular, when using the above clusters, the surface of the fine particles can suitably retain a mixed liquid composed of a defoaming liquid component (for example, the polymer (A)) and the organic medium (C), resulting in particularly excellent anti-popping properties. The aspect ratio of the primary particles can be controlled, in preparation of the organic solid fine particles (B), by appropriately adjusting the medium used for dissolution and precipitation, the temperature at which the fine particles are precipitated and crystallized, and, if necessary, the time for which the temperature at which the fine particles are precipitated and crystallized is maintained.

When the aspect ratio is less than 1.1, it is difficult to form clusters, making it difficult to retain the defoaming liquid component and to achieve excellent anti-popping properties. On the other hand, when the aspect ratio exceeds 100, clusters have excessively large voids, which also makes it difficult to retain the defoaming liquid component and to achieve excellent anti-popping properties. From the perspective of further enhancing the anti-popping properties, the aspect ratio is preferably in the range of 1.5 to 50, more preferably in the range of 1.5 to 30, and most preferably in the range of 1.5 to 11.0.

The aspect ratio of the primary fine particles can be calculated by measuring the shape of the isolated fine particles in observation with a TEM or SEM. Specifically, it can be calculated by the following method, for example. The fine particles to be measured are diluted and suspended in an appropriate volatile organic solvent or the like in which the fine particles do not dissolve, and dropped onto a TEM observation grid or SEM observation sample mount and dried to prepare an observation sample. The solvent type and the amount of dilution are adjusted as appropriate so that the fine particles are isolated. The sample prepared using a TEM or SEM is set to a magnification at which the isolated fine particles are easily observed, and the shape of the isolated fine particle is observed. When the shape of the fine particles is considered elliptical, the lengths of the minor and major axes are measured, and the ratio of the major axis/minor axis is calculated. Similar measurements are performed for at least 10 fine particles, and the average is taken as the aspect ratio of the fine particles. When the fine particles are fibrous and are not considered elliptical, the median value of the measured fiber widths is taken as the fiber width, and the ratio of the fiber length/fiber width is calculated. Similar measurements are performed for at least 10 isolated fibrous fine particles, and the average is taken as the aspect ratio of the fibrous fine particles.

### <Specific Examples>

The organic solid fine particles (B) are not specifically limited, and for example, one or more solid fine particles of amide, urea, polyethylene, oxidized polyethylene, acid-modified polyethylene, ethylene vinyl acetate copolymer, ethylene (meth)acrylic acid copolymer, polypropylene, acid-modified polypropylene, and hydrogenated castor oil can be suitably used.

Amides can be obtained by, for example, condensation reaction of fatty acids with amines. The conditions of the condensation reaction (reaction temperature, formulation ratio of the components, and the like) may be set as appropriate by a known method. For example, fatty acids and amines as raw materials are introduced into a reaction vessel such as a four-neck flask, and the raw materials are stirred in an inert gas atmosphere (for example, under a nitrogen gas flow or the like) to prepare a mixture. Then, the mixture of the raw materials is heated and subjected to a polycondensation reaction at 150°C to 200°C for 2 to 10 hours to synthesize a fatty acid amide. Examples of the fatty acids that can be used include monocarboxylic acids, dicarboxylic acids and tricarboxylic acids, and examples of the amines that can be used include monoamines, diamines and triamines.

Examples of monocarboxylic acids that can be used include saturated aliphatic monocarboxylic acids, such as acetic acid, propionic acid, butyric acid, valeric acid, caproic acid, enanthic acid, caprylic acid, pelargonic acid, capric acid, lauric acid, myristic acid, palmitic acid, stearic acid, hydrogenated castor oil fatty acid (fatty acid containing a hydroxyl group, such as 12-hydroxystearic acid (hereinafter, referred to as "12-HSA") obtained by saponifying hydrogenated castor oil), arachidic acid and behenic acid; and unsaturated aliphatic monocarboxylic acid, such as oleic acid, linoleic acid, ricinoleic acid, linolenic acid, eicosenoic acid, erucic acid and mixed fatty acids obtained from natural fats and oils (tall oil fatty acid, rice bran fatty acid, soybean oil fatty acid, tallow fatty acid, etc.). Among these monocarboxylic acids, it is preferred to contain at least a hydroxy fatty acid such as 12-HSA as the monocarboxylic acid for enhancing the defoaming properties and anti-popping properties of the aqueous paint. That is, the amide used as the organic solid fine particles (B) of the present invention is preferably an amide in which at least one of the fatty acids is a hydroxy fatty acid.

Examples of dicarboxylic acid that can be used include dicarboxylic acids having 4 to 44 carbon atoms, and examples of such dicarboxylic acids include succinic acid, glutaric acid, adipic acid, pimelic acid, suberic acid, azelaic acid, sebacic acid, dodecanedioic acid, maleic acid, fumaric acid, phthalic acid, isophthalic acid, terephthalic acid and dimer acids.

Examples of tricarboxylic acids that can be used include tricarboxylic acids having 4 to 54 carbon atoms, and examples of such tricarboxylic acids include trimer acids and trimesic acids.

Examples of monoamines that can be used include ethylamine, monoethanolamine, propylamine, butylamine, pentylamine, hexylamine, octylamine, decylamine, laurylamine, myristylamine, cetylamine, stearylamine, 12-hydroxystearylamine and behenylamine.

Examples of diamines that can be used include diamines having 2 to 54 carbon atoms, such as aliphatic diamines such as 1,2-diaminoethane (ethylenediamine: EDA), 1,2-diaminopropane (propylenediamine: PDA), 1,4-diaminobutane (tetramethylenediamine: TMDA), 1,6-diaminohexane (hexamethylenediamine: HMDA), 1,8-diaminooctane (octamethylenediamine: OMDA), trimethylhexamethylenediamine and 1,12-diaminododecane (dodecamethylenediamine: DMDA); aromatic diamines such as o-xylylenediamine, m-xylylenediamine (MXDA), p-xylylenediamine (PXDA), diaminodiphenylmethane, diaminodiphenyl ether, diaminodiphenyl sulfone and methylenebis(chloroaniline); and alicyclic diamines such as piperazine, isophorone diamine and 1,3-bisaminomethylcyclohexane.

Examples of triamines that can be used include triamines having 2 to 54 carbon atoms, such as aliphatic triamines such as diethylene triamine.

Further, as the amines used in synthesis of the amide of the present invention, diamines or triamines derived from polymerized fatty acids, which are polymerized fatty acid derivatives, can also be used. Examples of such polymerized fatty acid derivatives include dimer diamines (DDA), which are dimer acid derivatives, and trimer triamines (TTA), which are trimer acid derivatives.

One or more of the above compounds used as the fatty acids and the amines can be arbitrarily selected and used.

From the perspective of further enhancing the anti-popping properties, the amide is preferably a diamide. Diamides can be obtained by reacting fatty acids with diamines, or by reacting monoamines with dicarboxylic acids. Among the diamides, fatty acid diamides obtained by reacting the following fatty acids with the following diamines are more preferred. The fatty acids used in synthesis of the fatty acid diamide are selected from the group consisting of alkyl fatty acids (saturated fatty acids) and hydroxy fatty acids, and include at least one hydroxy fatty acid. Further, the diamines used in synthesis of the fatty acid diamide contain one or more diamines selected from the group consisting of alkylenediamines having 2 to 6 carbon atoms and m-xylylenediamine. Among these fatty acid diamides, ethylenebis 12-hydroxystearic acid diamide (ethylenebis(12-hydroxystearamide)), 1,4-butanebis 12-hydroxystearic acid diamide, hexamethylenebis 12-hydroxystearic acid diamide (hexamethylenebis(12-hydroxystearamide)), or the like can be used as the organic solid fine particles (B), whereby aqueous paints containing the surface control agent of the present invention can be provided with particularly excellent anti-popping properties.

Urea is a polymer, oligomer, diurea or monourea having a urea bond obtained by reaction of an isocyanate compound with an amine compound. As the isocyanate compound and the amine compound, one or more of the following compounds can be arbitrarily selected and used.

Examples of the isocyanate compounds that can be used include aromatic monoisocyanates, aliphatic monoisocyanates, alicyclic monoisocyanates, compounds obtained by making these monoisocyanates non-volatile and less toxic, aromatic diisocyanates, aliphatic diisocyanates, alicyclic diisocyanates, compounds obtained by making these diisocyanates non-volatile and less toxic, adducts of these diisocyanates, such as biuret forms, uretdione forms, isocyanurate forms, and allophanate forms, and urethane prepolymers of relatively low molecular weight. Examples of the aromatic diisocyanates include tolylene diisocyanate (TDI), 4,4'-diphenylmethane diisocyanate (MDI), xylylene diisocyanate (XDI) and m-xylylene diisocyanate (MXDI). Examples of the aliphatic diisocyanates include hexamethylene diisocyanate (HDI). Examples of the alicyclic diisocyanates include isophorone diisocyanate (IPDI) and hydrogenated MDI. The polyisocyanates may be commercially available products. Examples of the commercially available products include Aquanate 130, Aquanate 140, Aquanate 200 and Aquanate 210 (manufactured by Tosoh Corporation), Bayhydur 304, Bayhydur XP-2655, Bayhydur 401-70 and Bayhydur 3100 (manufactured by Sumika Covestro Urethane Co., Ltd.), Burnock DNW-5000, Burnock DNW-5500 and Burnock DNW-6000 (manufactured by DIC Corporation), Resamine D-1063 and Resamine D-2040 (manufactured by Dainichiseika Color & Chemicals Mfg. Co., Ltd.), and the like.

Examples of the amine compounds include monoamines or polyamines.

Examples of the monoamines that can be used include aliphatic monoamines, alicyclic monoamines, aromatic monoamines and alkanolamines. Examples of the aliphatic monoamines include alkylmonoamines and other aliphatic monoamines. Examples of the alkylmonoamines include octylamine, dodecyl amine, octadecylamine and octadecenylamine. Examples of the alicyclic monoamines include cyclohexylamine. Examples of the aromatic monoamines include aniline and toluidine. Examples of the alkanolamines include ethanolamine, 2-amino-2-methyl-1-propanol and 12-hydroxystearylamine.

Examples of the polyamines include aliphatic polyamines, alicyclic polyamines and aromatic polyamines. Examples of the aliphatic polyamines include alkylene polyamines, polyalkylene polyamines and other aliphatic polyamines. Examples of the alkylene polyamines include diaminomethane (methylenediamine), 1,2-diaminoethane, 1,2-diaminopropane, 1,3-diaminopropane, 1,4-diaminobutane, 1,5-diaminopentane, 1,6-diaminohexane, 1,7-diaminoheptane, 1,8-diaminooctane, 1,9-diaminononane and 1,10-diaminodecane. Examples of the polyalkylene polyamines include diethylenetriamine, triethylenetetramine, tetraethylenepentamine, pentaethylenehexamine and hexamethylenetetramine. Examples of the other aliphatic polyamines include tetra(aminomethyl)methane, tetrakis(2-aminoethyl aminomethyl)methane, 1,3-bis(2'-aminoethylamino)propane, triethylene-bis(trimethylene)hexamine, bis(3-aminoethyl)amine, bishexamethylenetriamine and polyethyleneimine. Examples of the alicyclic polyamines include 1,4-cyclohexane diamine, 4,4'-methylenebiscyclohexylamine, 4,4'-isopropylidenebiscyclohexylamine, norbornadiamine, bis(aminomethyl)cyclohexane, diaminodicyclohexylmethane, isophoronediamine and menthenediamine (MDA). Examples of the aromatic polyamines include bis(cyanoethyl)diethylenetriamine, o-xylylenediamine, m-xylylenediamine, p-xylylenediamine, phenylenediamine, naphthylenediamine, diaminodiphenylmethane, diaminodiethylphenylmethane, 2,2-bis(4-aminophenyl)propane, 4,4'-diaminodiphenylether, 4,4'-diaminobenzophenone, 4,4'-diaminodiphenylsulfone, 2,2'-dimethyl-4,4'-diaminodiphenylmethane, 2,4'-diaminobiphenyl, 2,3'-dimethyl-4,4'-diaminobiphenyl, 3,3'-dimethoxy-4,4'-diaminobiphenyl, bis(aminomethyl)naphthalene and bis(aminoethyl)naphthalene.

Oxidized polyethylene is a wax obtained by oxidizing polyethylene and introducing polar groups. Acid-modified polyethylene and acid-modified polypropylene are polyethylene and polypropylene graft-modified with an unsaturated carboxylic acid or an anhydride thereof. Ethylene vinyl acetate copolymers and ethylene (meth)acrylic acid copolymers are copolymers of ethylene and polymerizable monomers such as vinyl acetate and (meth)acrylic acid.

Hydrogenated castor oil (also referred to as "hardened castor oil") is a triglyceride of saturated fatty acids, which is obtained by hydrogenating castor oil. The hydrogenated castor oil that can be used include commercially available products, and examples thereof include C-wax (manufactured by Kokura Synthetic Industries, Ltd.), KAOWAX 85P (manufactured by Kao Corporation), hardened castor oil A (manufactured by Itoh Oil Chemicals Co., Ltd.) and hardened castor oil (manufactured by Yamakei Industries Co., Ltd.).

Examples of the organic solid fine particles (B) according to the present invention that can be used further include, in addition to the examples described above, polyalkyl (meth)acrylates, dibasic acid ester copolymers, copolymers of alkyl (meth)acrylates and fatty acid vinyl esters, provided that these are in a solid state in the surface control agent at 25°C and do not belong to the polymer (A).

Among the above specific examples, it is preferred to use ethylenebis 12-hydroxystearic acid diamide, 1,4-butanebis 12-hydroxystearic acid diamide, hexamethylenebis 12-hydroxystearic acid diamide, oxidized polyethylene, or the like in order to further enhance defoaming properties and anti-popping properties.

### <Content>

The content of the above organic solid fine particles (B) is preferably 0.1 mass% to 10 mass% when the total mass of all components in the surface control agent is 100 mass%. When the content of the organic solid fine particles (B) is 0.1 mass% to 10 mass%, sufficient defoaming properties and anti-popping properties can be exhibited. In order to further improve the appearance of the coating film obtained by the aqueous paint composition to which the surface control agent has been added, the content of the organic solid fine particles (B) is more preferably 1 mass% to 5 mass%.

### (Organic Medium (C))

The organic medium (C) according to the present invention is a component for exhibiting defoaming properties and anti-popping properties together with the above-mentioned polymer (A), and is added to improve diffusion of the surface control agent in the foam lamella.

### <Fluidity>

As the organic medium (C), a medium, other than water, that is liquid at 25°Ccan be used. Further, the organic medium (C) is selected from those having 0 to 2 repeating units. That is, the organic medium (C) includes a compound having no repeating unit and derivatives thereof, and a compound having one or two repeating units and derivatives thereof. Using such a medium can improve diffusion of the surface control agent according to the present invention in the foam lamella.

### <Specific Examples>

As the organic medium (C), for example, one or more organic media selected from the group consisting of hydrocarbon oils, alcohols, glycol ethers, glycol esters and polyhydric alcohol fatty acid esters (those not included in the polymer (A)) can be suitably used.

Examples of the hydrocarbon oils that can be used include n-paraffins and isoparaffins represented by general formula CₙH₂ₙ₊₂, and cycloparaffins represented by CₙH₂ₙ.

Examples of the n-paraffins represented by the above general formula CₙH₂ₙ₊₂ include n-hexane, n-heptane, n-octane, n-decane, n-dodecane and liquid paraffin, and commercially available n-paraffin-based mixed solvents can also be used. Examples of the commercially available n-paraffin-based mixed solvents include #0 Solvent L (manufactured by ENEOS Corporation). One or more of these can be arbitrarily selected and used.

Examples of the isoparaffins represented by the above general formula CₙH₂ₙ₊₂ include isohexane, isooctane, isododecane and isohexadecane, and commercially available isoparaffin-based mixed solvents can also be used. Examples of the commercially available isoparaffin-based mixed solvents include IP Solvent, Merveille 30 (all manufactured by Idemitsu Kosan Co., Ltd.), ShellSol T series (manufactured by Shell Chemicals) and Isopar series (manufactured by Exxon Mobil Corporation). One or more of these can be arbitrarily selected and used.

Examples of the cycloparaffins represented by the above general formula CₙH₂ₙ include commercially available naphthenic solvents. Examples of the commercially available naphthenic solvents include methylcyclohexane, ethylcyclohexane and Swaclean 150 (also known as: mixture of C9 and C10 alkylcyclohexanes) (all manufactured by Maruzen Petrochemical Co., Ltd.), Naphthesol series and Cactus Solvent series (all manufactured by ENEOS Corporation). One or more of these can be arbitrarily selected and used.

Further, as the organic medium (C), commercially available solvents may be used in which at least two selected from n-paraffins and isoparaffins represented by general formula CₙH₂ₙ₊₂ and cycloparaffins represented by general formula CₙH₂ₙ used in the present invention are pre-mixed. Examples of such solvents include Naphthesol M (naphthene/isoparaffin/n-paraffin = 70% or greater/5 to 10%/15% or less, trade name of ENEOS Corporation), Isozol 300 (trade name of ENEOS Corporation), Isozol 400 (trade name of ENEOS Corporation), Exxsol D80 (mixed solvent of paraffin and cycloparaffin, trade name of Exxon Mobil Corporation), Exxsol D110 (mixed solvent of paraffin and cycloparaffin, trade name of Exxon Mobil Corporation), Exxsol D130 (mixed solvent of paraffin and cycloparaffin, trade name of Exxon Mobil Corporation), Exxsol D160 (mixed solvent of paraffin and cycloparaffin, trade name of Exxon Mobil Corporation). One or more of these can be arbitrarily selected and used.

Examples of the alcohols that can be used include ethanol, n-propanol, isopropanol, n-butanol, sec-butanol, tert-butanol, 2-ethylhexanol, isostearyl alcohol, oleyl alcohol and Texanol. Examples of the glycol ethers that can be used include butyl glycol, 2-ethylhexyl glycol, methyl diglycol, dimethyl diglycol, methyl propylene glycol, n-propyl propylene glycol, butyl propylene glycol, methyl dipropylene glycol, propyl dipropylene glycol and butyl dipropylene glycol. Examples of the glycol esters that can be used include propylene glycol monomethyl ether acetate and dipropylene glycol monomethyl ether acetate. Examples of the polyhydric alcohol fatty acid esters include glycerin fatty acid esters, sorbitan fatty acid esters, trimethylolpropane fatty acid esters and sucrose fatty acid esters.

Examples of the organic medium (C) that can be used further include, in addition to those described above, aromatic solvents such as xylene and toluene, ketone-based solvents such as methyl isobutyl ketone (MIBK), methyl ethyl ketone (MEK) and methyl amyl ketone (MAK: also referred to as 2-heptanone), ether-based solvents such as cyclopentyl methyl ether, acetate esters, ester-based solvents such as ethyl 3-ethoxypropionate, amide-based solvents such as dimethylformamide, N-methyl-2-pyrrolidone, N-ethyl-2-pyrrolidone, 3-methoxy-N,N-dimethylpropane amide and 3-butoxy-N,N-dimethylpropane amide, oils and fats, and the like.

### <Content>

The above-mentioned organic medium (C) may not necessarily be contained in the surface control agent of the present invention, but when the organic medium (C) is contained, the content thereof is preferably 0.5 mass% to 95 mass% when the total mass of all components in the surface control agent is 100 mass%. When the content of the organic medium (C) is 0.5 mass% to 95 mass%, sufficient defoaming properties and anti-popping properties can be exhibited. In order to further enhance the defoaming properties and anti-popping properties, the content of the organic medium (C) is more preferably 5 mass% to 80 mass%.

### (Other Optional Components)

The surface control agent of the present invention may further contain components other than the above-mentioned components and other than silicone compounds to the extent that does not impair the features of the present invention, in order to impart other functions. For example, solvents, surfactants, amphiphilic compounds or paint additives other than surface control agents may be added for uniformly dissolving or dispersing the above-mentioned components (A) to (C) or improving the leveling properties or homogeneity of the paint to which the surface control agent has been added. Specific examples thereof include water, nonionic surfactants, anionic surfactants, cationic surfactants, amphoteric surfactants, leveling agents and dispersants (those not included in the polymer (A), the organic solid fine particles (B) and the organic medium (C)).

### (Components Not Contained in Surface Control Agent According to Present Invention)

Preferably, the surface control agent according to the present invention does not contain a silicone compound (synthesized polymer having a main skeleton formed by siloxane bonds). If a silicone compound is contained in the surface control agent according to the present invention, the silicone component may bleed onto the surface of the coating film, which can cause cissing or may impair overcoatability. Thus, if a silicone compound is contained in the surface control agent of the present invention, it may affect the appearance of the coating film formed using an aqueous paint containing the surface control agent. Therefore, in the preferred embodiments of the surface control agent according to the present invention, the surface control agent does not contain a silicone compound.

### (Form of Surface Control Agent)

Specific examples of the form of the surface control agent according to the present invention include a suspension in which the organic solid fine particles (B) are suspended, a form in which an oily suspension is dispersed in a medium mainly composed of water (O (suspension)/W type emulsion), a form in which droplets mainly composed of water are dispersed in an oily suspension (W/O (suspension) type emulsion), and a form in which the above W/O (suspension) type emulsion is further dispersed in a medium mainly composed of water (W/O (suspension)/W type emulsion).

### (Method for Producing Surface Control Agent)

The method for producing a surface control agent containing the above components is not specifically limited, but in order to facilitate production of a uniformly dispersed surface control agent and to achieve excellent defoaming properties and anti-popping properties, it is preferred to prepare a pre-dispersion of the organic solid fine particles (B) (hereinafter, referred to as a "fine particle pre-dispersion") in advance and add it to a mixture of the components. The fine particle pre-dispersion is preferably added while stirring with a disperser or the like. The stirring rate and stirring temperature may be appropriately set depending on the dispersion state of the organic solid fine particles (B) and the like. The method for preparing a fine particle pre-dispersion is not specifically limited, and any method known to those skilled in the art can be used. Known examples of the method include a method in which an organic solid (B') to be formed into the organic solid fine particles (B) is melted at a predetermined temperature, and the melted liquid is introduced into a vessel containing a polymer (A) and/or an organic medium (C), thereby precipitating the organic solid fine particles (B) in the polymer (A) and/or the organic medium (C) while cooling; a method in which a charged mixture containing an organic solid (B'), a polymer (A) and/or an organic medium (C) is melted at a predetermined temperature in a vessel, and a polymer (A) and/or an organic medium (C) are introduced into the melted liquid, thereby precipitating the organic solid fine particles (B) while cooling; and a method in which organic solid fine particles (B) that have been adjusted to a predetermined particle size are heated while being suspended in a polymer (A) and/or an organic medium (C).

### (Applications of Surface Control Agent)

Applications suitable for the surface control agent according to the present invention are not specifically limited as long as it is added to aqueous paints, but the surface control agent is particularly suitably used for applications that require high-quality appearance and in coating systems involving multilayer coating films. For example, the use of the surface control agent according to the present invention can impart sufficient defoaming properties during production, application and drying of aqueous automotive base paints, aqueous automotive intermediate paints, aqueous paints for high-class furniture, floor paints, architectural interior and exterior paints, anticorrosive paints, paints for home appliances, and the like, and can prevent occurrence of coating defects such as popping in the baking step. In particular, it can effectively prevent the occurrence of popping when forming a multilayer coating film using wet-on-wet coating. The surface control agent according to the present invention can also be suitably used in applications where paint materials that are difficult to disperse in water are used and the paint is used while being circulated to prevent sedimentation and separation of the components of the paint. Further, as described above, the surface control agent of the present invention has excellent defoaming properties, anti-popping properties and overcoatability, and therefore the surface control agent of the present invention is particularly suitably used as a defoaming agent or an anti-popping agent for aqueous paints. That is, the surface control agent of the present invention is preferably a defoaming agent or an anti-popping agent.

### (Mechanism by Which Effects Are Exhibited)

The mechanism by which defoaming droplets and hydrophobic fine particles cause defoaming is well known to those skilled in the art. For example, it is described as follows. When defoaming droplets or hydrophobic fine particles enter the foam lamella and the thickness of the foam lamella decreases due to water drainage from the foam lamella, the defoaming components contained in the defoaming droplets or the hydrophobic fine particles penetrate the foam lamella. Since the penetrated defoaming components are highly hydrophobic, water tries to avoid the defoaming components, causing the bubbles to burst.

Further, the mechanism by which popping occurs is thought to be as follows. Air bubbles trapped in an uncured coating film during application increase in diameter during baking and curing as the volatile components of the solvent in the paint penetrate the bubbles, and finally grow until the diameter of bubbles reaches a size equal to or greater than the film thickness. As a result, bubbles remaining in the cured coating film without bursting and marks left in the cured coating film after they burst cause a coating defect known as "popping". Therefore, the size of popping is proportional to the film thickness, and the thicker the film the larger the popping defects become.

To prevent occurrence of such popping, when an aqueous paint is used for coating, it is necessary to break the trapped bubbles as much as possible during the setting, preheating and baking stages. However, since the coating system undergoes a phase transition from an aqueous to a non-aqueous system during the setting and preheating stages, a polymer with an appropriate polarity range (SP value) and an appropriate weight-average molecular weight range is required to break the trapped bubbles during such a phase transition.

Further, when forming a single-layer coating film, a foam-breaking effect is expected in each of the setting, preheating and baking steps, but when forming a multilayer coating film by a wet-on-wet process, in which a paint for an upper coating film is applied while the lower coating film is still uncured, and a plurality of uncured coating films are simultaneously baked and cured, it is necessary to completely remove the trapped bubbles during the setting and preheating stages. Therefore, conventional surface control agents (defoaming agents, anti-popping agents) containing only polymer components do not exhibit a sufficient foam-breaking effect. On the other hand, while the use of low-polarity polymers such as silicone compounds to enhance the foam-breaking effect provides high foam-breaking performance, it compromises overcoatability, thereby limiting their use in formation of multilayer coating films.

Therefore, the surface control agent of the present invention contains the above-mentioned polymer (A) and organic solid fine particles (B) as essential components. Such a surface control agent is thought to significantly improve the foam-breaking effect of the polymer component by using the polymer (A) having an SP value and a weight-average molecular weight within predetermined ranges together with organic solid fine particles (B) having high affinity for the polymer (A) so that it exhibits excellent foam-breaking effect against trapped bubbles even during the phase transition of the coating system and removes trapped bubbles solely during the setting and preheating stages when forming a multilayer coating film by a wet-on-wet process. In order to enhance the affinity of the organic solid fine particles for the polymer component, it is more desirable that the shape of the organic solid fine particles (B) has specific characteristics. Specifically, organic solid fine particles (B) which are (1) porous fine particles, (2) fine particles with asperities on the surface, or (3) clusters of microcrystals having a specific aspect ratio are thought to have particularly high affinity for the polymer (A).

### [Aqueous Paint Composition]

An aqueous paint composition according to the present invention contains, as essential components, the above-mentioned surface control agent, and an aqueous resin. Further, an aqueous paint composition according to the present invention may further contain, as optional components, diluent solvents, pigments, dispersants, lubricants, emulsifiers, rheology control agents, film-forming aids, pH adjusters, and other paint materials.

### (Content of Surface Control Agent)

The content of the surface control agent according to the present invention varies depending on the type of the aqueous resin as a binder in the aqueous paint composition, the formulation composition of pigments, or the like, but typically, the content is preferably 0.1 mass% to 5 mass% based on the aqueous paint composition, and more preferably 0.5 mass% to 2 mass%. When the content of the surface control agent is less than 0.1 mass%, the effects due to addition of the surface control agent of the present invention, such as defoaming properties and anti-popping properties, may not be sufficiently exhibited. On the other hand, a content of the surface control agent exceeding 5 mass% is not desirable since it may cause poor interlayer adhesion when applying layers of paint or unevenness in coating of an overlying (upper) coating film, or may deteriorate water resistance of the dried coating film.

### (Aqueous Resin)

The aqueous resin contained as a binder in the aqueous paint composition according to the present invention is one in which a resin component is dispersed in a medium mainly composed of water, and examples of the resin component include acrylic-based resins, acrylic silicone resins, alkyd-based resins, polyester-based resins, urethane-based resins, epoxy-based resins, silicone resins, fluororesins, and the like. The form of the aqueous resin is classified into a water-soluble type, a colloidal dispersion type and an emulsion type depending on the dispersion form, and any of these forms can be used. These resins may be, for example, thermosetting type, UV-curable type, electron-beam (EB)-curable type, oxidative curable type, photocationic curable type or peroxide-curable type, or may be resins that are cured by chemical reaction in the presence or absence of a catalyst, or may be resins having a high glass transition point and forming a film merely by volatilization of a diluting medium without involving chemical reactions. Further, examples of curing agents include amino resins, melamine resins, isocyanate compounds, block isocyanate compounds, silane coupling agents, epoxy compounds, and the like.

### (Pigment)

Examples of the pigment include extender pigments such as calcium carbonate (ground calcium carbonate (GCC), precipitated calcium carbonate (PCC), and the like), barium sulfate, silicon dioxide, aluminum hydroxide, talc, mica, organic fibers and glass powder; coloring pigments such as titanium dioxide, carbon black, chrome yellow, cadmium yellow, ocher, titanium yellow, zinc chromate, red iron oxide, aluminosilicate, quinacridone pigments, phthalocyanine pigments, anthraquinone pigments, diketopyrrolopyrrole pigments, benzimidazolone pigments and isoindolinone pigments; and luster pigments such as metallic pigments and effect pigments (pearl pigments) obtained by coating a metallic pigment with a metal oxide such as titanium oxide. Examples of the metallic pigments include aluminum flakes, copper flakes, glass flakes, artificial crystals of alumina (for example, Xirallic (registered trademark) is commercially available from Merck), micaceous iron oxide, mica, and the like.

### (Other Additives)

The aqueous paint composition of the present invention may contain other substances within a range that does not impair the characteristics thereof and purposes of the present invention. Examples of such substances include dispersants, lubricants, emulsifiers, rheology control agents, water scavengers (for example, silane coupling agents), adhesion promoters, surfactants, curing catalysts, film-forming aids, dryers, anti-fouling agents, sensitizers, antioxidants, photostabilizers, UV absorbers, water resistant agents, antiseptic and antifungal agents, leveling agents, flame retardants, antistatic agents, release agents, deodorants, pH adjusters, fragrances, and the like.

Surfactants are typically used as dispersants to disperse pigments in paints, wetting agents to improve wetting and smoothness of pigments, emulsifiers to emulsify non-aqueous resins, or rheology control agents to control the fluidity of paints, but such surfactants generate unnecessary bubbles during production and application of aqueous paints. However, by providing the surface control agent of the present invention in the aqueous paint composition, it is possible to suppress generation and persistence of bubbles and to prevent occurrence of popping when forming a multilayer coating film using wet-on-wet coating. As a result, a coating film with excellent coating film appearance can be formed without impairing overcoatability.

### (Method for Producing Aqueous Paint Composition)

The aqueous paint composition according to the present invention can be produced by using known methods for preparing aqueous paints. For example, components other than the surface control agent and the pigment described above are mixed with stirring in a medium mainly composed of water, such as deionized water, and then the pH is adjusted, if necessary, to prepare a clear paint. The surface control agent and the pigment are then added and dispersed in the clear paint to prepare an aqueous paint composition.

The surface control agent according to the present invention can be added to the aqueous paint at the timing when the pigment is kneaded as described above or after the aqueous paint is produced. Further, it is also possible to prepare a master batch and add it to the aqueous paint. Further, the surface control agent and the pigment can be dispersed using a device which is typically used for production of aqueous paints. In addition, conditions for the stirring rate and stirring time in dispersion of the surface control agent and the pigment are not particularly limited, and may be set as appropriate according to the dispersion state of the surface control agent and the pigment.

### (Applications of Aqueous Paint Composition)

The aqueous paint composition of the present invention is suitably used for applications that require high-quality appearance and in coating systems involving multilayer coating films (in particular, when forming a multilayer coating film using wet-on-wet coating). Examples of such applications include coating of automotive materials, coating of high-class furniture materials, floor coatings, architectural interior and exterior coatings, anticorrosive coatings, coating of home appliances, and the like. The aqueous paint composition according to the present invention can also be suitably used in applications where paint materials that are difficult to disperse in water are used and the paint is used while being circulated to prevent sedimentation and separation of the components of the paint.

### [Article]

An article according to the present invention is an article in which a surface of a substrate serving as an object to be coated is coated with a coating agent containing the above-mentioned surface control agent. That is, an article of the present invention is composed of a substrate, and a coating film obtained by coating a surface of the substrate with a coating agent.

### (Substrate)

Examples of the substrate of the article according to the present invention include, but are not limited to, substrates made of metal, plastic, wood, rubber, glass, stone, cement, mortar, paper, non-woven fabric, cloth or ceramics.

### (Coating Film)

Examples of the coating film included in the article of the present invention include those obtained by applying the above aqueous paint composition to the above substrate and then curing the applied composition. The coating film formed on the surface of the substrate may be a single layer or a laminate of multiple coating films (multilayer coating film). Since the aqueous paint composition containing the surface control agent of the present invention is excellent in defoaming properties and anti-popping properties, satisfactory coating film appearance can be achieved without impairing overcoatability even when the aqueous paint composition is used for applications that require extremely high-quality appearance and overcoatability.

### (Coating Agent)

Examples of the coating agent of the present invention used for coating of the above substrate include the above-mentioned aqueous paint composition.

### (Method for Producing Article)

The article of the present invention can be produced by applying a coating agent such as the aqueous paint composition of the present invention to the above-mentioned substrate, and then drying and curing the applied coating agent. The method of applying the coating agent is not specifically limited, and examples thereof include spray coating, roll coating, brush coating, curtain coating, bar coating, doctor blade coating, slit coating, dip coating, flow coating, and the like. The method of curing the coating agent is not specifically limited, and examples thereof include room temperature curing, heat curing, UV curing, and the like.

Further, when multiple coating films (multilayer coating film) are formed on the article of the present invention, the multilayer coating film may include, for example, a first coating film obtained by applying the aqueous paint composition of the present invention to the substrate, and a second coating film laminated on all or part of a surface of the first coating film. The second paint used to form the second coating film may be the same as or different from the first paint used to form the first coating film. Further, when forming a multilayer coating film, the second paint may be applied after the first paint is completely dried or cured, or may be applied while the first paint is incompletely dried or cured to the extent that it is not disturbed by the application of the second paint. Since the aqueous paint composition containing the surface control agent of the present invention is excellent in overcoatability, good interlayer adhesion is achieved between a coating film obtained by the aqueous paint composition of the present invention and a coating film overcoated on the coating film, even when the aqueous paint composition is used for applications that require extremely high-quality appearance and overcoatability.

When forming a multilayer coating film on the article of the present invention, the multilayer coating film may be formed by, for example, applying the second paint to all or part of a surface of the coating film obtained by curing the first paint containing the surface control agent of the present invention. Alternatively, the second paint may be applied by a wet-on-wet process without curing the first aqueous paint containing the surface control agent of the present invention, and then the first and second paints may be cured simultaneously.

The methods of applying and curing the second paint are not specifically limited, and the same methods as those described above can be used.

### (Applications of Article)

The article of the present invention is suitably used for applications that require high-quality appearance and in coating systems involving multilayer coating films (in particular, when forming a multilayer coating film by a wet-on-wet process). Examples of such applications include automotive parts, high-class furniture, home appliances, and the like.

### [Method for Forming Multilayer Coating Film]

A method for forming a multilayer coating film according to the present invention is a method in which two or more aqueous paints are sequentially applied to a surface of an object to be coated by a wet-on-wet process, and then the aqueous paints applied to the object to be coated are simultaneously heated and cured to thereby form two or more coating films. In this case, at least one of the two or more aqueous paints is an aqueous paint composition containing the surface control agent of the present invention described above.

As the object to be coated, the substrate of the article according to the present invention described above can be used.

Examples of the two or more aqueous paints that can be used include a first aqueous paint containing the above-mentioned coloring pigment (corresponding to the "first paint" in this specification), a second aqueous paint containing the above-mentioned luster pigment (corresponding to the "second paint" in this specification), and a clear paint. In this case, at least one of the first aqueous paint and the second aqueous paint (that is, only the first aqueous paint, only the second aqueous paint, or both the first aqueous paint and the second aqueous paint) may be the aqueous paint composition containing the surface control agent of the present invention described above.

The method for applying the aqueous paint to the object to be coated is not specifically limited, and examples thereof include spray coating, roll coating, brush coating, curtain coating, bar coating, doctor blade coating, slit coating, dip coating, flow coating, and the like. The method for curing the aqueous paint is not specifically limited, and examples thereof include room temperature curing, heat curing, UV curing, and the like. Further, when two or more aqueous paints are applied by a wet-on-wet process, it is preferred to apply natural drying, air blowing or preheat-drying as necessary after applying the first aqueous paint containing the surface control agent of the present invention to thereby remove unnecessary solvents (volatile components such as water and organic solvent) without curing the first aqueous paint, and then apply the second aqueous paint. In particular, preheat-drying is suitable as the method for drying the first aqueous paint.

Some preferred embodiments of the present invention have been described above, but the present invention is not limited to the aforementioned embodiments. That is, other embodiments or various modifications that would occur to those skilled in the art within the scope of the appended claims should be construed as being within the technical scope of the present invention.

Specifically, the invention includes the following aspects.
(1) A surface control agent for aqueous paints, the surface control agent comprising: a polymer (A) having an SP value of 6 to 12 and a weight-average molecular weight of 200 to 1,000,000 and having at least three repeating units; and organic solid fine particles (B) which are in a solid state in the surface control agent at 25°C.
(2) The surface control agent according to (1), wherein the polymer (A) is one or more polymers selected from the group consisting of poly(alkyl vinyl ether), polybutadienes, polybutenes, polyalphaolefins, polyalkyl (meth)acrylates, dibasic acid ester copolymers, poly(fatty acid vinyl esters), polyalkylene glycols and derivatives thereof, polyamides, polyglycerol fatty acid esters, and polyesters.
(3) The surface control agent according to (1) or (2), wherein the organic solid fine particles (B) are one or more solid fine particles selected from the group consisting of amide, urea, polyethylene, oxidized polyethylene, acid-modified polyethylene, ethylene vinyl acetate copolymer, ethylene (meth)acrylic acid copolymer, polypropylene, acid-modified polypropylene, and hydrogenated castor oil.
(4) The surface control agent according to (3), wherein the amide is a fatty acid diamide obtained by reacting fatty acids with diamines, the fatty acids being selected from the group consisting of alkyl fatty acids and hydroxy fatty acids and including at least one hydroxy fatty acid, and the diamines including one or more diamines selected from the group consisting of alkylenediamines having 2 to 6 carbon atoms and m-xylylenediamine.
(5) The surface control agent according to any one of (1) to (4), wherein the crystals of the organic solid fine particles (B) have an aspect ratio of 1.1 to 100.
(6) The surface control agent according to any one of (1) to (5), wherein the organic solid fine particles (B) have a mode diameter of 0.1 µm to 150 µm.
(7) The surface control agent according to any one of (1) to (6), further comprising an organic medium (C), other than water, that is liquid at 25°C, wherein the organic medium (C) has 0 to 2 repeating units.
(8) The surface control agent according to (7), wherein the organic medium (C) is one or more organic media selected from the group consisting of hydrocarbon oils, alcohols, glycol ethers, glycol esters and polyhydric alcohol fatty acid esters.
(9) An aqueous paint composition comprising: the surface control agent according to any one of (1) to (8); and an aqueous resin.
(10) An article coated with a coating agent containing the surface control agent according to any one of (1) to (8).
(11) A method for forming a multilayer coating film, the method comprising a film-formation step in which two or more aqueous paints are sequentially applied to a surface of an object to be coated by a wet-on-wet process, and then the aqueous paints applied to the object to be coated are simultaneously heated and cured to thereby form two or more coating films, wherein at least one of the two or more aqueous paints contains the surface control agent according to any one of (1) to (8).
(12) The method for forming a multilayer coating film according to (11), wherein a first aqueous paint containing a coloring pigment and a second aqueous paint containing a luster pigment are used as the two or more aqueous paints, at least one of the first aqueous paint and the second aqueous paint contains the surface control agent, and in the film-formation step, the first aqueous paint, the second aqueous paint and a clear paint are sequentially applied by a wet-on-wet process, and then the first aqueous paint, the second aqueous paint and the clear paint are simultaneously heated and cured to thereby form, on a surface of the object to be coated, a first aqueous resin coating film, a second aqueous resin coating film and a clear coating film laminated in this order from the side of the object to be coated.

### Examples

The present invention will be specifically described below by using examples. The present invention is not limited to these examples in any manner. In the examples, "%" and "parts" indicate "mass%" and "parts by mass," respectively, unless otherwise specified.

### [Preparation of Surface Control Agent Samples]

Surface control agent samples E1 to E33 and C1 to C9 were prepared as follows.

### (Synthesis and Preparation of Polymer)

In the examples and comparative examples, materials listed in Table 1 below were used as the polymer components containing the polymer (A). The materials whose component type is listed as "A" in Table 1 are examples of the polymer (A) of the present invention, and the materials whose component type is listed as "non-A component" are materials that do not correspond to the polymer (A) of the present invention. The synthesis methods for materials whose "Source" in Table 1 is described as "Production method described in the present application" are as follows.

### <Synthesis of Polymer 1>

95.3 parts of butyl acetate was charged into a 500 mL reaction vessel equipped with a stirrer, a reflux condenser, a dropping funnel, a thermometer and a nitrogen gas introduction tube. Then, while stirring under a nitrogen gas flow, the internal temperature was raised until butyl acetate refluxed. A mixture consisting of 281.3 parts of vinyl laurate, 93.8 parts of BLEMMER AME-400 (methoxy polyethylene glycol acrylate manufactured by NOF Corporation) and 18.8 parts of tert-butyl peroxy-2-ethylhexanoate 50% solution was charged into the above dropping funnel as a dropping solution. Next, while maintaining the internal temperature of the reaction vessel under reflux, the above dropping solution was uniformly added dropwise over a period of 120 minutes. After the dropping was completed, the reaction temperature was maintained under reflux for 40 minutes to perform the reaction. After the reaction was completed, the solvent was removed using an evaporator to thereby obtain polymer 1. The weight-average molecular weight of the synthesized polymer was 14,700 (SP value: 9.3).

### <Synthesis of Polymer 2>

95.0 parts of butyl acetate and 159.4 parts of dibutyl fumarate were provided in a 500 mL reaction vessel equipped with a stirrer, a reflux condenser, a dropping funnel, a thermometer and a nitrogen gas introduction tube. Then, while stirring under a nitrogen gas flow, the internal temperature was raised until butyl acetate refluxed. A mixture consisting of 28.1 parts of dibutyl fumarate, 187.5 parts of ethyl acrylate, 30.0 parts of 2,2-di(tert-amylperoxy)butane 55% solution and 7.5 parts of 2-ethylhexyl thioglycolate was charged into the above dropping funnel as a dropping solution. Next, while maintaining the internal temperature of the reaction vessel under reflux, the above dropping solution was uniformly added dropwise over a period of 120 minutes. After the dropping was completed, the reaction temperature was maintained under reflux for 120 minutes to perform the reaction. After the reaction was completed, the solvent was removed using an evaporator to thereby obtain polymer 2. The weight-average molecular weight of the synthesized polymer was 3,500 (SP value: 10.1).

### <Synthesis of Polymer 3>

108.0 parts of butyl acetate was charged into a 500 mL reaction vessel equipped with a stirrer, a reflux condenser, a dropping funnel, a thermometer and a nitrogen gas introduction tube. Then, while stirring under a nitrogen gas flow, the internal temperature was raised until butyl acetate refluxed. A mixture consisting of 375.0 parts of 2-ethylhexyl acrylate and 17.2 parts of 2,2-di(tert-amylperoxy)butane 55% solution was charged into the above dropping funnel as a dropping solution. Next, while maintaining the internal temperature of the reaction vessel under reflux, the above dropping solution was uniformly added dropwise over a period of 120 minutes. After the dropping was completed, the reaction temperature was maintained under reflux for 60 minutes to perform the reaction. After the reaction was completed, the solvent was removed using an evaporator to thereby obtain polymer 3. The weight-average molecular weight of the synthesized polymer was 7,800 (SP value: 9.2).

### <Synthesis of Polymer 4>

197.5 parts of Merveille 30 (an isoparaffin-based solvent manufactured by Idemitsu Kosan Co., Ltd.) was charged into a 500 mL reaction vessel equipped with a stirrer, a reflux condenser, a dropping funnel, a thermometer and a nitrogen gas introduction tube. Then, while stirring under a nitrogen gas flow, the internal temperature was raised to 95°C. A mixture consisting of 250.0 parts of lauryl methacrylate, 49.4 parts of Merveille 30 and 3.1 parts of tert-butyl peroxy-2-ethylhexanoate 40% solution was charged into the above dropping funnel as a dropping solution. Next, while maintaining the internal temperature of the reaction vessel at 95°C, the above dropping solution was uniformly added dropwise over a period of 75 minutes. After the dropping was completed, the reaction temperature was maintained at 95°C for 60 minutes. Then, 0.7 parts of tert-butyl peroxy-2-ethylhexanoate 40% solution was added, and the temperature was maintained at 95°C for 45 minutes. Then, the internal temperature of the reaction vessel was raised to 100°C, and the reaction was performed for 30 minutes. After the reaction was completed, the heating residue was adjusted to 50% using Merveille 30 to thereby obtain polymer 4. The weight-average molecular weight of the synthesized polymer was 178,900 (SP value: 9.0).

### <Synthesis of Polymer 5>

150.0 parts of toluene was charged into a 1,000 mL reaction vessel equipped with a stirrer, a reflux condenser, a dropping funnel, a thermometer and a nitrogen gas introduction tube. Then, while stirring under a nitrogen gas flow, the internal temperature was raised to 35°C. Next, a mixture of 0.30 parts of boron trifluoride diethyl ether complex and 2.7 parts of diethyl ether was added to the above reaction vessel. Then, 300.0 parts of ethyl vinyl ether was charged into the above dropping funnel as a dropping solution, and the dropping solution was uniformly added dropwise over a period of 120 minutes while maintaining the internal temperature of the reaction vessel at 35°C. After the dropping was completed, the reaction temperature was maintained at 35°C for 30 minutes to perform the reaction, and then 15.00 parts of ethanol was added to the above reaction vessel. After the reaction was completed, the solvent was removed using an evaporator to thereby obtain polymer 5. The weight-average molecular weight of the synthesized polymer was 4,000 (SP value: 8.6).

### <Synthesis of Polymer 6>

221.0 parts of dimer acid and 29.0 parts of hexamethylenediamine were provided in a 500 mL reaction vessel equipped with a stirrer, a water separator, a reflux condenser, a thermometer and a nitrogen gas introduction tube. Then, the internal temperature was raised to 150°C while stirring under a nitrogen gas flow, and the reaction was performed while maintaining the reaction temperature for 60 minutes, and then the internal temperature was further raised to 175°C, and the reaction was performed while maintaining the reaction temperature for 90 minutes to thereby obtain polymer 6. The weight-average molecular weight of the synthesized polymer was 5,800 (SP value: 9.6).

### <Synthesis of Polymer 7>

136.6 parts of dimer acid and 13.5 parts of hexamethylenediamine were provided in a 500 mL reaction vessel equipped with a stirrer, a water separator, a reflux condenser, a thermometer and a nitrogen gas introduction tube. Then, the internal temperature was raised to 150°C while stirring under a nitrogen gas flow, and the reaction was performed while maintaining the reaction temperature for 60 minutes, and then the internal temperature was further raised to 175°C, and the reaction was performed while maintaining the reaction temperature for 90 minutes. Thereafter, 230.0 parts of NEWPOL (registered trademark) LB-625 (polypropylene glycol monobutyl ether manufactured by Sanyo Chemical Industries, Ltd.) were charged into the reaction vessel, and the internal temperature was raised to 240°C while stirring, and the reaction was performed while maintaining the reaction temperature for 7 hours to thereby obtain polymer 7. The weight-average molecular weight of the synthesized polymer was 8,700 (SP value: 9.0).

### <Synthesis of Polymer 8>

118.2 parts of butyl acetate was charged into a 500 mL reaction vessel equipped with a stirrer, a reflux condenser, a dropping funnel, a thermometer and a nitrogen gas introduction tube. Then, while stirring under a nitrogen gas flow, the internal temperature was raised until butyl acetate refluxed. A mixture consisting of 125.0 parts of vinyl laurate and 6.8 parts of 2,2-di(tert-amylperoxy)butane 55% solution was charged into the above dropping funnel as a dropping solution. Next, while maintaining the internal temperature of the reaction vessel under reflux, the above dropping solution was uniformly added dropwise over a period of 120 minutes. After the dropping was completed, the reaction temperature was maintained under reflux for 60 minutes to perform the reaction. After the reaction was completed, the solvent was removed using an evaporator to thereby obtain polymer 8. The weight-average molecular weight of the synthesized polymer was 8,100 (SP value: 9.2).

### <Synthesis of Polymer 9>

188.5 parts of Merveille 30 (an isoparaffin-based solvent manufactured by Idemitsu Kosan Co., Ltd.) was charged into a 1,000 mL reaction vessel equipped with a stirrer, a reflux condenser, a dropping funnel, a thermometer and a nitrogen gas introduction tube. Then, while stirring under a nitrogen gas flow, the internal temperature was raised to 95°C. A mixture consisting of 250.0 parts of lauryl methacrylate, 47.1 parts of Merveille 30 and 12.5 parts of tert-butyl peroxy-2-ethylhexanoate 40% solution was charged into the above dropping funnel as a dropping solution. Next, while maintaining the internal temperature of the reaction vessel at 95°C, the above dropping solution was uniformly added dropwise over a period of 75 minutes. After the dropping was completed, the reaction temperature was maintained at 95°C for 60 minutes. Then, 0.7 parts of tert-butyl peroxy-2-ethylhexanoate 40% solution was added, and the temperature was maintained at 95°C for 45 minutes. Then, the internal temperature of the reaction vessel was raised to 100°C, and the reaction was performed for 30 minutes. After the reaction was completed, the heating residue was adjusted to 50% using Merveille 30 to thereby obtain polymer 9. The weight-average molecular weight of the synthesized polymer was 74,100 (SP value: 9.0).

### <Synthesis of Polymer 10>

362.5 parts of ethanol and 12.50 parts of dimethyl 2,2'-azobis(isobutyrate) were provided in a 500 mL reaction vessel equipped with a stirrer, a reflux condenser, a dropping funnel, a thermometer and a nitrogen gas introduction tube. Then, while stirring under a nitrogen gas flow, the internal temperature was raised to 70°C. A mixture consisting of 125.0 parts of methacrylic acid and 6.25 parts of 2-ethylhexyl thioglycolate was charged into the above dropping funnel as a dropping solution. Next, while maintaining the internal temperature of the reaction vessel at 70°C, the above dropping solution was uniformly added dropwise over a period of 120 minutes. After the dropping was completed, the reaction temperature was maintained at 70°C for 180 minutes. After the reaction was completed, the solvent was removed using an evaporator and the heating residue was adjusted to 50% to thereby obtain polymer 10. The weight-average molecular weight of the synthesized polymer was 4,000 (SP value: 12.5).

The SP values of the polymers listed in Table 1 were calculated by the Fedors method. The weight-average molecular weights of the polymers listed in Table 1 were measured by using HLC-8320GPC (manufactured by Tosoh Corporation) as a measurement device, using TSKgel GMHxl×2, TSKgel G2500Hxl, TSKgel G2000Hxl and TSKgel guardcolumn (all manufactured by Tosoh Corporation) as columns, and using tetrahydrofuran (THF) as a mobile phase, at a column temperature of 40°C, a flow rate of 1 mL/min, with a RI detector as a detector. The weight-average molecular weights listed in Table 2 were values calculated based on a molecular weighs of standard polystyrene from a chromatogram measured by gel permeation chromatography (GPC).

**[Table 1]**

| Table 1 Materials for surface control agent samples (polymer) | | | | | |
|---|---|---|---|---|---|
| Component type | Name | Source | Component | Weight-average molecular weight | SP value |
| A | Lipolube 400H | Lion Specialty Chemicals Co., Ltd. | polyalphaolefin (ethylene/propylene copolymer) | 3,100 | 8.2 |
| A | PTMG650 | Mitsubishi Chemical Corporation | polybutylene glycol | 1,800 | 10.0 |
| A | EMALEX RWIS-305 | Nihon Emulsion Co., Ltd. | polyethylene glycol hydrogenated castor oil triisostearate | 3,500 | 8.8 |
| A | EMALEX RWIS-320 | Nihon Emulsion Co., Ltd. | polyethylene glycol hydrogenated castor oil triisostearate | 4,000 | 8.9 |
| A | UNILUBE MB-370 | NOF Corporation | polypropylene glycol monobutyl ether | 6,900 | 8.8 |
| A | UNIOL TG-4000R | NOF Corporation | polypropylene glycol glyceryl ether | 6,600 | 9.0 |
| A | NEWPOL LB-625 | Sanyo Chemical Industries, Ltd. | polypropylene glycol monobutyl ether | 3,900 | 8.8 |
| A | LBR-352 | Kuraray Co.. Ltd. | polybutadiene | 10,000 | 8.3 |
| A | PIBVE | Siwei Development Group, Ltd. | poly(isobutyl vinyl ether) (containing 40% isoparaffin) | 294,000 | 8.4 |
| A | RCB-BO-HV | Royal | poly(fatty acid ester) | 5,600 | 9.0 |
| A | Durasyn 164 | INEOS Oligomers | polyalphaolefin (polydecene) | 700 | 8.4 |
| A | LV-100 | ENEOS Corporation | polybutene | 800 | 8.0 |
| A | LV-7 | ENEOS Corporation | polybutene | 400 | 8.0 |
| A | Polymer 1 | Production method described in the present application | vinyl laurate/methoxypolyethylene glycol acrylate copolymer | 14,700 | 9.3 |
| A | Polymer 2 | Production method described in the present application | dibutyl fumarate/ethyl acrylate copolymer | 3,500 | 10.1 |
| A | Polymer 3 | Production method described in the present application | poly(2-ethylhexyl acrylate) | 7.800 | 9.2 |
| A | Polymer 4 | Production method described in the present application | poly(lauryl methacrylate) (containing 50% Merveille 30) | 178,900 | 9.0 |
| A | Polymer 5 | Production method described in the present application | poly(ethyl vinyl ether) | 4,000 | 8.6 |
| A | Polymer 6 | Production method described in the present application | dimer acid/hexamethylene diamine copolymer | 5,800 | 9.6 |
| A | Polymer 7 | Production method described in the present application | polypropylene glycol monobutyl ether adduct of dimer acid/hexamethylene diamine copolymer | 8,700 | 9.0 |
| A | Polymer 8 | Production method described in the present application | poly(vinyl laurate) | 8,100 | 9.2 |
| A | Polymer 9 | Production method described in the present application | poly(lauryl methacrylate) (containing 50% Merveille 30) | 74.100 | 9.0 |
| A | MFTG | Nippon Nyukazai Co., Ltd. | tripropylene glycol monomethyl ether | 300 | 10.0 |
| A | SY Glyster PO-3S | Sakamoto Yakuhin Kogyo Co., Ltd. | polyglyceryl-4 pentaoleate | 2,200 | 9.2 |
| A | SY Glyster PO-5S | Sakamoto Yakuhin Kogyo Co., Ltd. | polyglyceryl-6 pentaoleate | 2,300 | 9.7 |
| A | S Face IS-1005P | Sakamoto Yakuhin Koryo Co., Ltd. | polyglyceryl-10 pentaisostearate | 2,500 | 10.3 |
| A | S Face IS-1009P | Sakamoto Yakuhin Kogyo Co., Ltd. | polyglyceryl-10 nonaisostearate | 3,300 | 9.3 |
| non-A component | MFDG | Nippon Nyukazai Co.. Ltd. | dipropylene glycol monomethyl ether | 200 | 10.4 |
| non-A component | Polymer 10 | Production method described in the present application | polymethacrylic acid (containing 50% ethanol) | 4,000 | 12.5 |
| non-A component | FS1265-10000cst | Dow Toray Co., Ltd. | fluorine-modified silicone | 20,000 | 7.0 |
| non-A component | SY Glyster MO-3S | Sakamoto Yakuhin Kogyo Co., Ltd. | polyglyceryl-4 monooleate | 1.100 | 12.4 |

### (Production and Preparation of Solid Fine Particles)

In the examples and comparative examples, materials listed in Table 2 below were used as the solid fine particle components containing the organic solid fine particles (B). The materials whose component type is listed as "B" in Table 2 are examples of the organic solid fine particles (B) of the present invention. The production methods for the materials in Table 2 are as follows. Specifically, fine particles OC-1 to OC-17, which are examples of the organic solid fine particles (B), were produced by the methods described below.

### <OC-1>

2 moles of 12-hydroxystearic acid (12-HSA) and 1 mole of hexamethylenediamine were reacted at 190°C for 6 hours under a nitrogen gas flow while removing water formed during the reaction to thereby obtain diamide (a1) (step 0). Next, a mixture (fine particle mixture) of 10 parts of diamide (a1) as the fine particle component and 90 parts of Merveille 30 (isoparaffin-based solvent manufactured by Idemitsu Kosan Co., Ltd.) as the organic medium (D) was heated to 165°C using a heater to heat and dissolve the diamide (a1) in Merveille 30 to thereby obtain a fine particle dissolved solution (step 1). Further, 60 parts of Merveille 30 was charged into a 500 mL vessel, and the above fine particle dissolved solution was introduced into the vessel under stirring, and the mixture was cooled until the temperature after mixing reached 97.0°C (step 2). After the mixed solution to which the fine particle dissolved solution has been added was cooled to approximately 30°C, 40 parts of ethanol was added to the mixed solution and stirred (step 3). Next, the temperature of the mixed solution was adjusted to 46.5°C while maintaining the stirring, and the stirring was continued for 12 minutes to obtain a pre-dispersion of fine particles OC-1 (step 4).

### <OC-2>

A pre-dispersion of fine particles OC-2 was obtained in the same manner as with OC-1, except that NEWPOL LB-625 (polypropylene glycol monobutyl ether manufactured by Sanyo Chemical Industries, Ltd.) was used instead of Merveille 30 in step 1 and step 2, the fine particle mixture was heated to 135°C in step 1, the mixture was cooled until the temperature after mixing reached 42.9°C in step 2, NEWPOL LB-625 was used instead of ethanol in step 3, and step 4 was not performed.

### <OC-3>

A pre-dispersion of fine particles OC-3 was obtained in the same manner as with OC-1, except that 2 moles of 12-HSA and 1 mole of ethylenediamine were reacted to obtain diamide (a2) in step 0, diamide (a2) was used instead of diamide (a1) and the fine particle mixture was heated to 155°C in step 1, the mixture was cooled until the temperature after mixing reached 45.6°C in step 2, and the temperature of the mixed solution was adjusted to 45.5°C in step 4.

### <OC-4>

A pre-dispersion of fine particles OC-4 was obtained in the same manner as with OC-1, except that 2 moles of 12-HSA and 1 mole of 1,4-diaminobutane were reacted to obtain diamide (a3) in step 0, diamide (a3) was used instead of diamide (a1) and the fine particle mixture was heated to 160°C in step 1, the mixture was cooled until the temperature after mixing reached 97.0°C in step 2, and the temperature of the mixed solution was adjusted to 42.0°C in step 4.

### <OC-5>

A pre-dispersion of fine particles OC-5 was obtained in the same manner as with OC-1, except that step 0 was not performed, hydrogenated castor oil was used instead of diamide (a1) and the fine particle mixture was heated to 95°C in step 1, the mixture was cooled until the temperature after mixing reached 53.9°C in step 2, and step 4 was not performed.

### <OC-6>

A pre-dispersion of fine particles OC-6 was obtained in the same manner as with OC-1, except that step 0 was not performed, A-C629 (low-density oxidized polyethylene manufactured by Honeywell Japan Ltd.) was used instead of diamide (a1) and the fine particle mixture was heated to 150°C in step 1, in step 2, 100 parts of Merveille 30 was charged, and the mixture was cooled until the temperature after mixing reached 46.7°C, and step 3 and step 4 were not performed.

### <OC-7>

A pre-dispersion of fine particles OC-7 was obtained in the same manner as with OC-1, except that Butycel (butyl glycol manufactured by KH Neochem Co., Ltd.) was used instead of Merveille 30 in step 1 and step 2, the fine particle mixture was heated to 120°C in step 1, the mixture was cooled until the temperature after mixing reached 25.0°C in step 2, butycel was used instead of ethanol in step 3, and step 4 was not performed.

### <OC-8>

A pre-dispersion of fine particles OC-8 was obtained in the same manner as with OC-1, except that, after step 3, instead of step 4, the mixed solution obtained in step 3 was introduced into a bottle, which was then heated to 70°C over a period of 24 hours, and maintained at this temperature for 24 hours, and then the mixture was cooled to 25°C over a period of 24 hours.

### <OC-9>

A pre-dispersion of fine particles OC-9 was obtained in the same manner as with OC-1, except that DOWANOL (registered trademark) PM (methyl propylene glycol manufactured by Dow Toray Co., Ltd.) was used instead of Merveille 30 in step 1 and step 2, the fine particle mixture was heated to 110°C in step 1, the mixture was cooled until the temperature after mixing reached 48.5°C in step 2, and the temperature of the mixed solution was adjusted to 50.4°C in step 4.

### <OC-10>

A pre-dispersion of fine particles OC-10 was obtained in the same manner as with OC-1, except that 2 moles of 12-HSA and 1 mole of m-xylylenediamine were reacted to obtain diamide (a4) in step 0, diamide (a4) was used instead of diamide (a1) and the fine particle mixture was heated to 150°C in step 1, the mixture was cooled until the temperature after mixing reached 46.5°C in step 2, and the temperature of the mixed solution was adjusted to 47.3°C in step 4.

### <OC-11>

A pre-dispersion of fine particles OC-11 was obtained in the same manner as with OC-1, except that 2-ethylhexanol (manufactured by Mitsubishi Chemical Corporation) was used instead of Merveille 30 in step 1 and step 2, the fine particle mixture was heated to 135°C in step 1, the mixture was cooled until the temperature after mixing reached 45.5°C in step 2, and the temperature of the mixed solution was adjusted to 62.1°C in step 4.

### <OC-12>

A pre-dispersion of fine particles OC-12 was obtained in the same manner as with OC-1, except that step 0 was not performed, 2-ethylhexanol (manufactured by Mitsubishi Chemical Corporation) was used instead of Merveille 30, A-C629 (low-density oxidized polyethylene manufactured by Honeywell Japan Ltd.) was used instead of diamide (a1), and the fine particle mixture was heated to 120°C in step 1 and step 2, 100 parts of 2-ethylhexanol was provided and the mixture was cooled until the temperature after mixing reached 35.5°C in step 2, and step 3 and step 4 were not performed.

### <OC-13>

A pre-dispersion of fine particles OC-13 was obtained in the same manner as with OC-1, except that step 0 was not performed, 2-ethylhexanol (manufactured by Mitsubishi Chemical Corporation) was used instead of Merveille 30, Ceridust 3620 (polyethylene wax manufactured by Clariant (Japan) K.K.) was used instead of diamide (a1), and the fine particle mixture was heated to 140°C in step 1 and step 2, 100 parts of 2-ethylhexanol was provided and the mixture was cooled until the temperature after mixing reached 32.2°C in step 2, and step 3 and step 4 were not performed.

### <OC-14>

A pre-dispersion of fine particles OC-14 was obtained in the same manner as with OC-1, except that step 0 was not performed, Ceridust 3620 (polyethylene wax manufactured by Clariant (Japan) K.K.) was used instead of diamide (a1) and the fine particle mixture was heated to 130°C in step 1, 100 parts of Merveille 30 was provided and the mixture was cooled until the temperature after mixing reached 35.3°C in step 2, and step 3 and step 4 were not performed.

### <OC-15>

A pre-dispersion of fine particles OC-15 was obtained in the same manner as with OC-1, except that step 0 was not performed, A-C405T (ethylene vinyl acetate copolymer manufactured by Honeywell Japan Ltd.) was used instead of diamide (a1) and the fine particle mixture was heated to 100°C in step 1, 100 parts of Merveille 30 was provided and the mixture was cooled until the temperature after mixing reached 35.9°C in step 2, and step 3 and step 4 were not performed.

### <OC-16>

A pre-dispersion of fine particles OC-16 was obtained in the same manner as with OC-1, except that step 0 was not performed, 2-ethylhexanol (manufactured by Mitsubishi Chemical Corporation) was used instead of Merveille 30, A-C540 (ethylene acrylic acid copolymer manufactured by Honeywell Japan Ltd.) was used instead of diamide (a1), and the fine particle mixture was heated to 120°C in step 1 and step 2, 100 parts of 2-ethylhexanol was provided and the mixture was cooled until the temperature after mixing reached 33.3°C in step 2, and step 3 and step 4 were not performed.

### <OC-17>

A pre-dispersion of fine particles OC-17 was obtained in the same manner as with OC-1, except that step 0 was not performed, Viscol 660-P (polypropylene wax manufactured by Sanyo Chemical Industries, Ltd.) was used instead of diamide (a1) and the fine particle mixture was heated to 120°C in step 1, 100 parts of Merveille 30 was provided and the mixture was cooled until the temperature after mixing reached 30.1°C in step 2, and step 3 and step 4 were not performed.

### <Measurement of Peak Particle Size>

For the fine particles OC-1 to OC-17 obtained as described above, the peak particle size was measured using a particle size analyzer Microtrac MT-3000 EXII/USVR (manufactured by Microtrac) and Merveille 30 as a circulating solvent. The peak particle size (µm) of each organic solid fine particle is shown in Table 2.

### <Measurement of Aspect Ratio>

For the fine particles OC-1 to OC-17 obtained as described above, the aspect ratio was measured as described in 1) to 7) below.
1) The pre-dispersion of the fine particles OC-1 to OC-17 was diluted 300-fold with xylene, and irradiated with ultrasonic waves for 30 seconds to disperse the fine particles in the diluted solution.
2) On filter paper, one drop of the diluted solution from 1) was placed on a copper microgrid (grid pitch 150 µm) with a carbon-reinforced collodion support film, and allowed to dry naturally.
3) The microgrid on which the fine particle sample obtained in 2) had been placed was fixed to an SEM mount using carbon tape.
4) SEM measurements were performed under the following conditions. Measurement device: SU3500 (manufactured by Hitachi High-Tech Corporation), measurement mode: high vacuum-low accelerating voltage, captured image: backscattered electron image, image magnification: 2,000x, brightness/contrast: auto, focus: manual.
5) Image analysis was performed using image analysis software (ImageJ). After brightness/contrast correction and smoothing correction, images were binarized to remove noise, particles at image boundaries and aggregated particles, and particle analysis was performed.
6) When particles to be measured were composed only of convex shapes, particle analysis was performed, in which the aspect ratio (= long diameter value/short diameter value) was calculated from the obtained long and short diameter values of each particle. The average of the aspect ratios of 10 or more particles was used as the aspect ratio of the fine particle sample (fine particles OC-1 to OC-17).
7) When particles to be measured had convex and non-convex shapes, the fiber length was measured using the Freehand Line tool, and the fiber width at the center of the particle was measured using the Straight Line tool, and the aspect ratio (= fiber length value/fiber width value) was calculated. The average of the aspect ratios of 10 or more particles was used as the aspect ratio of the sample.

The above "non-convex shape" means that the area of the particle's convex hull (the region enclosed by a shrinkable virtual curve) is at least twice the actual particle area. Further, the above "convex shape" means that the area of the particle's convex hull is less than twice the actual particle area. The aspect ratio of each organic solid fine particle is shown in Table 2.

**[Table 2]**

| Table 2 Raw Materials for Surface Control Agent Samples (Organic Solid Fine Particles) | | | | | |
|---|---|---|---|---|---|
| Component type | Name | Source | Component | Aspect ratio | Peak particle size / µm |
| B | OC-1 | Production method described in the present application | diamide (a1) composed of 12-HSA and hexamethylenediamine | 6.1 | 4.2 |
| B | OC-2 | Production method described in the present application | same diamide (a1) as OC-1 | 13.5 | 3.0 |
| B | OC-3 | Production method described in the present application | diamide (a2) composed of 12-HSA and ethylenediamine | 4.7 | 16.0 |
| B | OC-4 | Production method described in the present application | diamide (a3) composed of 12-HSA and 1,4-diaminobutane | 8.9 | 5.9 |
| B | OC-5 | Production method described in the present application | hydrogenated castor oil | 10.8 | 3.8 |
| B | OC-6 | Honeywell Japan Ltd. | low-density oxidized polyethylene A-C 629 | 1.5 | 2.5 |
| B | OC-7 | Production method described in the present application | same diamide (a1) as OC-1 | 1.3 | 18.4 |
| B | OC-8 | Production method described in the present application | same diamide (a1) as OC-1 | 44.5 | 127.6 |
| B | OC-9 | Production method described in the present application | same diamide (a1) as OC-1 | 24.4 | 17.5 |
| B | OC-10 | Production method described in the present application | diamide (a4) composed of 12-HSA and m-xylylenediamine | 8.9 | 5.9 |
| B | OC-11 | Production method described in the present application | same diamide (a1) as OC-1 | 13.9 | 2.9 |
| B | OC-12 | Honeywell Japan Ltd. | low-density oxidized polyethylene A-C 629 | 1.5 | 2.3 |
| B | OC-13 | Clariant (Japan) K.K. | polyethylene wax Ceridust3620 | 1.6 | 3.6 |
| B | OC-14 | Clariant (Japan) K.K. | polyethylene wax Ceridust3620 | 1.6 | 57.1 |
| B | OC-15 | Honeywell Japan Ltd. | ethylene vinyl acetate copolymer A-C405T | 1.5 | 5.0 |
| B | OC-16 | Honeywell Japan Ltd. | ethylene acrylic acid copolymer A-C540 | 1.5 | 3.6 |
| B | OC-17 | Sanyo Chemical Industries, Ltd. | polypropylene wax Viscol 660-P | 1.5 | 6.5 |

### (Preparation of Organic Medium)

In the examples and comparative examples, materials listed in Table 3 below were used as the organic medium (C). The boiling points of some of the materials are shown in Table 3.

**[Table 3]**

| Table 3 Materials for surface control agent samples (organic medium) | | | | |
|---|---|---|---|---|
| Component type | Name | Source | Component | Boiling point/°C |
| C | Merveille 30 | Idemitsu Kosan Co., Ltd. | Isoparaffin | 184-199 |
| C | Ethanol | Sojitz Corporation | Ethanol | 78 |
| C | 2-ethylhexanol | Mitsubishi Chemical Corporation | 2-ethylhexanol | 184 |
| C | DOWANOL PM | Dow Toray Co., Ltd. | methyl propylene glycol | 121 |
| C | Butycel | KH Neochem Co., Ltd. | butyl glycol | 171 |
| C | Isoparaffin | Siwei Development Group, Ltd. | isoparaffin (solvent containing PIBVE manufactured by Siwei) | - |
| C | Methyl isobuthyl ketone | KH Neochem Co., Ltd. | Methyl isobuthyl ketone | 116 |

### (Preparation of Surface Control Agent Samples)

Surface control agent smaples E1 to E43 and C1 to C11 were prepared by the methods described below. Details of the preparation method for each surface control agent sample are as follows.

### <Surface Control Agent Sample E1>

35.0 parts of Uniol (registered trademark) TG-4000R (polypropylene glycol glyceryl ether manufactured by NOF Corporation) was charged into a 100 mL poly cup, to which 30.0 parts of a pre-dispersion of fine particles OC-1 was added while the contents of the cup were being stirred with a disperser. Then, the mixture was stirred and mixed at 2,000 rpm for 15 minutes to thereby obtain surface control agent sample E1.

### <Surface Control Agent Sample E2>

Surface control agent sample E2 was obtained in the same manner as with surface control agent sample E1, except that the pre-dispersion of fine particles OC-1 was changed to a pre-dispersion of fine particles OC-3.

### <Surface Control Agent Sample E3>

Surface control agent sample E3 was obtained in the same manner as with surface control agent sample E1, except that the pre-dispersion of fine particles OC-1 was changed to a pre-dispersion of fine particles OC-4.

### <Surface Control Agent Sample E4>

Surface control agent sample E4 was obtained in the same manner as with surface control agent sample E1, except that the pre-dispersion of fine particles OC-1 was changed to a pre-dispersion of fine particles OC-5.

### <Surface Control Agent Sample E5>

Surface control agent sample E5 was obtained in the same manner as with surface control agent sample E1, except that the pre-dispersion of fine particles OC-1 was changed to a pre-dispersion of fine particles OC-6.

### <Surface Control Agent Sample E6>

Surface control agent sample E6 was obtained in the same manner as with surface control agent sample E1, except that the pre-dispersion of fine particles OC-1 was changed to a pre-dispersion of fine particles OC-10.

### <Surface Control Agent Sample E7>

Surface control agent sample E7 was obtained in the same manner as with surface control agent sample E1, except that the pre-dispersion of fine particles OC-1 was changed to a pre-dispersion of fine particles OC-9.

### <Surface Control Agent Sample E8>

Surface control agent sample E8 was obtained in the same manner as with surface control agent sample E1, except that the added amount of Uniol TG-4000R was changed to 52.0 parts, and the added amount of the pre-dispersion of fine particles OC-1 was changed to 13.0 parts.

### <Surface Control Agent Sample E9>

Surface control agent sample E9 was obtained in the same manner as with surface control agent sample E1, except that the added amount of Uniol TG-4000R was changed to 13.0 parts and the added amount of the pre-dispersion of fine particles OC-1 was changed to 52.0 parts.

### <Surface Control Agent Sample E10>

Surface control agent sample E10 was obtained in the same manner as with surface control agent sample E1, except that the pre-dispersion of fine particles OC-1 was changed to a pre-dispersion of fine particles OC-7.

### <Surface Control Agent Sample E11>

Surface control agent sample E11 was obtained in the same manner as with surface control agent sample E1, except that the pre-dispersion of fine particles OC-1 was changed to a pre-dispersion of fine particles OC-8.

### <Surface Control Agent Samples E12 to E15, E17, E19 to E21, E23, E26 to E27, E30 to E31, E33 and E43>

Surface control agent samples E12 to E15, E17, E19 to E21, E23, E26 to E27, E30 to E31, E33 and E43 were obtained in the same manner as with surface control agent sample E1, except that Uniol TG-4000R was changed to "A: Polymer" described in Tables 5, 6 and 7.

### <Surface Control Agent Sample E16>

Surface control agent sample E16 was obtained in the same manner as with surface control agent sample E1, except that 35.0 parts of Uniol TG-4000R was changed to 27.5 parts of polymer 3 and 7.5 parts of EMALEX (registered trademark) RWIS-320 (polyethylene glycol hydrogenated castor oil triisostearate manufactured by Nihon Emulsion Co., Ltd.).

### <Surface Control Agent Sample E18>

Surface control agent sample E18 was obtained in the same manner as with surface control agent sample E1, except that 35.0 parts of Uniol TG-4000R was changed to 35.0 parts of a solution of polymer 4 in Merveille 30 (polymer concentration: 50 mass%).

### <Surface Control Agent Sample E22>

Surface control agent sample E22 was obtained in the same manner as with surface control agent sample E1, except that 35.0 parts of Uniol TG-4000R was changed to 7.5 parts of EMALEX RWIS-320 and 27.5 parts of PIBVE manufactured by Siwei Development Group, Ltd.

### (isoparaffin solution with PIBVE concentration of 60 mass%).

### <Surface Control Agent Sample E24>

Surface control agent sample E24 was obtained in the same manner as with surface control agent sample E1, except that 35.0 parts of Uniol TG-4000R was changed to a diluted polymer solution obtained by diluting 17.5 parts of polymer 6 with 17.5 parts of 2-ethylhexanol.

### <Surface Control Agent Sample E25>

Surface control agent sample E25 was obtained in the same manner as with surface control agent sample E1, except that 35.0 parts of Uniol TG-4000R was changed to a diluted polymer solution obtained by diluting 28.0 parts of polymer 7 with 7.0 parts of 2-ethylhexanol.

### <Surface Control Agent Sample E28>

Surface control agent sample E28 was obtained in the same manner as with surface control agent sample E1, except that the pre-dispersion of fine particles OC-1 was changed to a pre-dispersion of fine particles OC-2 and Uniol TG-4000R was changed to NEWPOL LB-625.

### <Surface Control Agent Sample E29>

Surface control agent sample E29 was obtained in the same manner as with surface control agent sample E1, except that 35.0 parts of Uniol TG-4000R was changed to 35.0 parts of a solution of polymer 9 in Merveille 30 (solvent) (polymer concentration: 50 mass%).

### <Surface Control Agent Sample E32>

Surface control agent sample E32 was obtained in the same manner as with surface control agent sample E1, except that Uniol TG-4000R was changed to PTMG 650 (polybutylene glycol manufactured by Mitsubishi Chemical Corporation) and the pre-dispersion of fine particles OC-1 was changed to a pre-dispersion of fine particles OC-11.

### <Surface Control Agent Sample E34>

Surface control agent sample E34 was obtained in the same manner as with surface control agent sample E1, except that Uniol TG-4000R was changed to SY-Glyster PO-3S (polyglyceryl-4 pentaoleate manufactured by Sakamoto Yakuhin Kogyo Co., Ltd.) and the pre-dispersion of fine particles OC-1 was changed to a pre-dispersion of fine particles OC-6.

### <Surface Control Agent Samples E35 to E37>

Surface control agent samples E35 to E37 were obtained in the same manner as with surface control agent sample E1, except that Uniol TG-4000R was changed to "A: Polymer" described in Table 7 and the pre-dispersion of fine particles OC-1 was changed to a pre-dispersion of fine particles OC-12.

### <Surface Control Agent Samples E38 to E42>

Surface control agent samples E38 to E42 were obtained in the same manner as with surface control agent sample E1, except that the pre-dispersion of fine particles OC-1 was changed to "B: Organic solid fine particles" and "C: Organic medium" described in Table 7.

### <Surface Control Agent Sample C1>

Surface control agent sample C1 was obtained in the same manner as with surface control agent sample E1, except that 24.0 parts of Merveille 30 and 6.0 parts of ethanol were used instead of 30.0 parts of the pre-dispersion of fine particles OC-1.

### <Surface Control Agent Sample C2>

Surface control agent sample C2 was obtained in the same manner as with surface control agent sample E30, except that 24.0 parts of Merveille 30 and 6.0 parts of ethanol were used instead of 30.0 parts of the pre-dispersion of fine particles OC-1.

### <Surface Control Agent Sample C3>

Surface control agent sample C3 was obtained in the same manner as with surface control agent sample E27, except that 24.0 parts of Merveille 30 and 6.0 parts of ethanol were used instead of 30.0 parts of the pre-dispersion of fine particles OC-1.

### <Surface Control Agent Sample C4>

A pre-dispersion of fine particles OC-1 was used as surface control agent sample C4.

### <Surface Control Agent Sample C5>

Surface control agent sample C5 was obtained in the same manner as with surface control agent sample E1, except that Uniol TG-4000R was changed to MFDG (dipropylene glycol monomethyl ether manufactured by Nippon Nyukazai Co., Ltd.), which is a non-A component.

### <Surface Control Agent Sample C6>

Surface control agent sample C6 was obtained in the same manner as with surface control agent sample E1, except that Uniol TG-4000R was changed to an ethanol solution of polymer 10, polymer 10 being a non-A component (polymer concentration: 50 mass%).

### <Surface Control Agent Sample C7>

13.0 parts of FS1265-10,000 cst (fluorine-modified silicone manufactured by Dow Toray Co., Ltd.) was diluted with 39.0 parts of methyl isobutyl ketone to obtain a diluted polymer solution. Next, the diluted polymer solution was charged into a 100 mL poly cup, to which 13.0 parts of a pre-dispersion of fine particles OC-1 was added while being stirred with a disperser. Then, the mixture was stirred and mixed at 2,000 rpm for 15 minutes to thereby obtain surface control agent sample C7.

### <Surface Control Agent Sample C8>

Surface control agent sample C8 was obtained in the same manner as with surface control agent sample E1, except that Uniol TG-4000R was changed to SY-Glyster MO-3S (polyglyceryl-4 monooleate manufactured by Sakamoto Yakuhin Kogyo Co., Ltd.), which is the non-A component, and the pre-dispersion of fine particles OC-1 was changed to a pre-dispersion of fine particles OC-12.

### <Surface Control Agent Sample C9>

Surface control agent sample C9 was obtained in the same manner as with surface control agent sample E1, except that Uniol TG-4000R was changed to SY-Glyster PO-3S (polyglyceryl-4 pentaoleate manufactured by Sakamoto Yakuhin Kogyo Co., Ltd.) and the pre-dispersion of fine particles OC-1 was changed to 46.2 parts of Merveille 30.

### <Surface Control Agent Sample C10>

Agitan 295 (manufactured by MUNZING CHEMIE GmbH), which is a mixture of hydrocarbons, hydrophobic silica and alkoxy compounds, was used as surface control agent sample C10.

### <Surface Control Agent Sample C11>

BYK-024 (manufactured by BYK), which is a mixture of silicone, hydrophobic fine particles and polyglycol, was used as surface control agent sample C11.

The compositions of the surface control agent samples prepared as described above are shown in Tables 4 to 8 below.

**[Table 4]**

| Table 4 Composition of Surface Control Agent Samples (Examples E1∼11) | | | | | | | | | | | | |
|---|---|---|---|---|---|---|---|---|---|---|---|---|
| Surface control agent sample No. (Examples) | | E1 | E2 | E3 | E4 | E5 | E6 | E7 | E8 | E9 | E10 | E11 |
| Component type | Component name | Formulation amount / % | | | | | | | | | | |
| A: Polymer | Uniol TG-4000R | 53.8 | 53.8 | 53.8 | 53.8 | 53.8 | 53.8 | 53.8 | 80.0 | 20.0 | 53.8 | 53.8 |
| | fine particles OC-1 | 2.3 | | | | | | | 1.0 | 4.0 | | |
| | fine particles OC-3 | | 2.3 | | | | | | | | | |
| | fine particles OC-4 | | | 2.3 | | | | | | | | |
| | fine particles OC-5 | | | | 2.3 | | | | | | | |
| B: Organic solid fine particles | fine particles OC-6 | | | | | 2.3 | | | | | | |
| | fine particles OC-10 | | | | | | 2.3 | | | | | |
| | fine particles OC-9 | | | | | | | 2.3 | | | | |
| | fine particles OC-7 | | | | | | | | | | 2.3 | |
| | fine particles OC-8 | | | | | | | | | | | 2.3 |
| C: Organic medium | Merveille 30 | 34.6 | 34.6 | 34.6 | 34.6 | 43.9 | 34.6 | | 15.0 | 60.0 | | 34.6 |
| | ethanol | 9.3 | 9.3 | 9.3 | 9.3 | | 9.3 | 9.3 | 4.0 | 16.0 | | 9.3 |
| | DOWANOL PM | | | | | | | 34.6 | | | | |
| | Butycel | | | | | | | | | | 43.9 | |
| Total formulation amount of surface control agent / % | | 100.0 | 100.0 | 100.0 | 100.0 | 100.0 | 100.0 | 100.0 | 100.0 | 100.0 | 100.0 | 100.0 |

**[Table 5]**

| Table 5 Composition of Surface Control Agent Samples (Examples E12~22) | | | | | | | | | | | | |
|---|---|---|---|---|---|---|---|---|---|---|---|---|
| Surface control agent sample No. (Examples) | | E12 | E13 | E14 | E15 | E16 | E17 | E18 | E19 | E20 | E21 | E22 |
| Component type | Component name | Formulation amount / % | | | | | | | | | | |
| | Unilube MB-370 | 53.8 | | | | | | | | | | |
| | polymer 1 | | 53.8 | | | | | | | | | |
| | polymer 2 | | | 53.8 | | | | | | | | |
| | LV-100 | | | | 53.8 | | | | | | | |
| A: Polymer | polymer 3 | | | | | 42.3 | | | | | | |
| | EMALEX RWIS-320 | | | | | 11.5 | | | | | | 11.5 |
| | DURASYN 164 | | | | | | 53.8 | | | | | |
| | polymer 4 | | | | | | | 26.9 | | | | |
| | polymer 5 | | | | | | | | 53.8 | | | |
| | Lipolube 400H | | | | | | | | | 53.8 | | |
| | RCB-BO-HV | | | | | | | | | | 53.8 | |
| | PIBVE | | | | | | | | | | | 25.4 |
| B: Organic solid fine particles | fine particles OC-1 | 2.3 | 2.3 | 2.3 | 2.3 | 2.3 | 2.3 | 2.3 | 2.3 | 2.3 | 2.3 | 2.3 |
| C: Organic medium | Merveille 30 | 34.6 | 34.6 | 34.6 | 34.6 | 34.6 | 34.6 | 61.5 | 34.6 | 34.6 | 34.6 | 34.6 |
| | ethanol | 9.3 | 9.3 | 9.3 | 9.3 | 9.3 | 9.3 | 9.3 | 9.3 | 9.3 | 9.3 | 9.3 |
| | isoparaffin | | | | | | | | | | | 16.9 |
| Total formulation amount of surface control agent / % | | 100.0 | 100.0 | 100.0 | 100.0 | 100.0 | 100.0 | 100.0 | 100.0 | 100.0 | 100.0 | 100.0 |

**[Table 6]**

| Table 6 Composition of Surface Control Agent Samples (Examples E23~33) | | | | | | | | | | | | |
|---|---|---|---|---|---|---|---|---|---|---|---|---|
| Surface control agent sample No. (Examples) | | E23 | E24 | E25 | E26 | E27 | E28 | E29 | E30 | E31 | E32 | E33 |
| Component type | Component name | Formulation amount / % | | | | | | | | | | |
| | EMALEX RWIS-305 | 53.8 | | | | | | | | | | |
| | polymer 6 | | 26.9 | | | | | | | | | |
| | polymer 7 | | | 43.0 | | | | | | | | |
| | polymer 8 | | | | 53.8 | | | | | | | |
| A: Polymer | NEWPOL LB-625 | | | | | 53.8 | 97.7 | | | | | |
| | polymer 9 | | | | | | | 26.9 | | | | |
| | LV-7 | | | | | | | | 53.8 | | | |
| | LBR-352 | | | | | | | | | 53.8 | | |
| | PTMG650 | | | | | | | | | | 53.8 | |
| | MFTG | | | | | | | | | | | 53.8 |
| B: Organic solid fine particles | fine particles OC-1 | 2.3 | 2.3 | 2.3 | 2.3 | 2.3 | | 2.3 | 2.3 | 2.3 | | 2.3 |
| | fine particles OC-2 | | | | | | 2.3 | | | | | |
| | fine particles OC-11 | | | | | | | | | | 2.3 | |
| C: Organic medium | Merveille 30 | 34.6 | 34.6 | 34.6 | 34.6 | 34.6 | | 61.5 | 34.6 | 34.6 | | 34.6 |
| | ethanol | 9.3 | 9.3 | 9.3 | 9.3 | 9.3 | | 9.3 | 9.3 | 9.3 | 9.3 | 9.3 |
| | 2-ethylhexanol | | 26.9 | 10.8 | | | | | | | 34.6 | |
| Total formulation amount of surface control agent / % | | 100.0 | 100.0 | 100.0 | 100.0 | 100.0 | 100.0 | 100.0 | 100.0 | 100.0 | 100.0 | 100.0 |

**[Table 7]**

| Table 7 Composition of Surface Control Agent Samples (Examples E34~43) | | | | | | | | | | | |
|---|---|---|---|---|---|---|---|---|---|---|---|
| Surface control agent sample No. (Examples) | | E34 | E35 | E36 | E37 | E38 | E39 | E40 | E41 | E42 | E43 |
| Component type | Component name | Formulation amount / % | | | | | | | | | |
| A: Polymer | SY-Glyster PO-3S | 53.8 | | | | | | | | | 53.8 |
| | SY-Glyster PO-5S | | 53.8 | | | | | | | | |
| | S-Face IS-1005P | | | 53.8 | | | | | | | |
| | S-Face IS-1009P | | | | 53.8 | | | | | | |
| | Uniol TG-4000R | | | | | 53.8 | 53.8 | 53.8 | 53.8 | 53.8 | |
| B: Organic solid fine particles | fine particles OC-1 | | | | | | | | | | 2.3 |
| | fine particles OC-6 | 2.3 | | | | | | | | | |
| | fine particles OC-12 | | 2.3 | 2.3 | 2.3 | | | | | | |
| | fine particles OC-13 | | | | | 2.3 | | | | | |
| | fine particles OC-14 | | | | | | 2.3 | | | | |
| | fine particles OC-15 | | | | | | | 2.3 | | | |
| | fine particles OC-16 | | | | | | | | 2.3 | | |
| | fine particles OC-17 | | | | | | | | | 2.3 | |
| C: Organic medium | Merveille 30 | 43.9 | | | | | 43.9 | 43.9 | | 43.9 | 34.6 |
| | 2-ethylhexanol | | 43.9 | 43.9 | 43.9 | 43.9 | | | 43.9 | | |
| | ethanol | | | | | | | | | | 9.3 |
| Total formulation amount of surface control agent / % | | 100.0 | 100.0 | 100.0 | 100.0 | 100.0 | 100.0 | 100.0 | 100.0 | 100.0 | 100.0 |

**[Table 8]**

| Table 8 Composition of Surface Control Agent Samples (Comparative Examples C1~11) | | | | | | | | | | | | |
|---|---|---|---|---|---|---|---|---|---|---|---|---|
| Surface control agent sample No. (Comparative Examples) | | C1 | C2 | C3 | C4 | C5 | C6 | C7 | C8 | C9 | C10 | C11 |
| Component type | Component name | Formulation amount / % | | | | | | | | | | |
| A: Polymer | Uniol TG-4000R | 53.8 | | | | | | | | | | |
| | LV-7 | | 53.8 | | | | | | | | | |
| | NEWPOL LB-625 | | | 53.8 | | | | | | | | |
| | SY-Glyster PO-3S | | | | | | | | | 53.8 | | |
| B: Organic solid fine particles | fine particles OC-1 | | | | 5.0 | 2.3 | 2.3 | 1.0 | | | | |
| | fine particles OC-12 | | | | | | | | 2.3 | | | |
| C: Organic medium | Merveille 30 | 36.9 | 36.9 | 36.9 | 75.0 | 34.6 | 34.6 | 15.0 | | 46.2 | | |
| | ethanol | 9.3 | 9.3 | 9.3 | 20.0 | 9.3 | 36.2 | 4.0 | | | | |
| | methyl isobutyl ketone | | | | | | | 60.0 | | | | |
| | 2-ethylhexanol | | | | | | | | 43.9 | | | |
| Non-A component | MFDG | | | | | 53.8 | | | | | | |
| | polymer 10 | | | | | | 26.9 | | | | | |
| | FS1265 | | | | | | | 20.0 | | | | |
| | SY-Glyster MO-3S | | | | | | | | 53.8 | | | |
| non-silicone defoaming agent containing hydrophobic fine particles (Agitan 295) | | | | | | | | | | | 100.0 | |
| defoaming agent containing silicone and hydrophobic fine particles (BYK-024) | | | | | | | | | | | | 100.0 |
| Total formulation amount of surface control agent / % | | 100.0 | 100.0 | 100.0 | 100.0 | 100.0 | 100.0 | 100.0 | 100.0 | 100.0 | 100.0 | 100.0 |

### [Preparation of Aqueous Paint]

Two types of aqueous paints (Blanks) were prepared according to the formulations shown in Tables 9 and 11. The formulations of the aqueous paint shown in Table 9 are the formulations of a first aqueous coloring paint (BC-1) containing the coloring pigment and the surface control agent, and the formulations of the aqueous paint shown in Table. 11 are the formulations of a second aqueous coloring paint (BC-2) containing the coloring pigment, the luster pigment and the surface control agent. The first aqueous coloring paint and the second aqueous coloring paint were prepared by preparing a pigment paste (P-1) and a pigment paste (P-2) to be used for the respective aqueous paints in advance, and mixing the respective pigment pastes with other paint components. The formulations of the pigment paste (P-1) and the pigment paste (P-2) are shown in Tables 10 and 12, respectively. In the preparation of the first aqueous coloring paint (BC-1) and the second aqueous coloring paint (BC-2), a surface control agent of surface control agent sample E27 was formulated. This surface control agent was added in order to eliminate bubbles generated in the preparation of the first aqueous coloring paint (BC-1) and the second aqueous coloring paint (BC-2).

**[Table 9]**

| Table 9 Formulation of first aqueous coloring paint (BC-1) | | | |
|---|---|---|---|
| Material | Source | Component | Formulation amount/part |
| Pigment paste (P-1) | - | - | 169.46 |
| Watersol S-727 | DIC Corporation | water-soluble acrylic resin (resin solid content 60%) | 103.33 |
| Cymel 325 | Allnex Japan Inc. | iminomethylated melamine resin (resin solid content 80%) | 31.30 |
| Deionized water | - | water | 74.63 |
| Aminoalcohol 2Mabs | Nippon Nyukazai Co., Ltd. | pH adjuster | 0.49 |
| 2-ethylhexanol | - | solvent | 10.20 |
| Surface control agent sample E27 | - | surface control agent | 3.80 |

**[Table 10]**

| Table 10 Pigment paste (P-1) for first aqueous coloring paint | | | |
|---|---|---|---|
| Material | Source | Component | Formulation amount/part |
| Watersol S-727 | DIC Corporation | water-soluble acrylic resin (resin solid content 60%) | 21.70 |
| JR-806 | Tayca Corporation | white pigment | 90.00 |
| MA100 | Mitsubishi Chemical Corporation | black pigment | 2.00 |
| Ethylene glycol monobutyl ether | - | solvent | 5.00 |
| Deionized water | - | water | 44.60 |
| DISPARLON AQ-380 | Kusumoto Chemicals, Ltd. | dispersant | 4.46 |
| Surface control agent sample E27 | - | surface control agent | 1.70 |

**[Table 11]**

| Table 11 Formulation of second aqueous coloring paint (BC-2) | | | |
|---|---|---|---|
| Material | Source | Component | Formulation amount/part |
| Pigment paste (P-2) | - | - | 138.83 |
| Watersol ACD-2001 | DIC Corporation | acrylic polyol dispersion (resin solid content 40%) | 547.37 |
| Bayhydrol UA2856XP | Covestro | acrylic-modified urethane dispersion (resin solid content 35%) | 347.53 |
| Cymel 325 | Allnex Japan Inc. | iminomethylated melamine resin (resin solid content 80%) | 182.43 |
| DISPARLON AQ-633E | Kusumoto Chemicals, Ltd. | rheology control agent | 48.65 |
| Aminoalcohol 2Mabs | Nippon Nyukazai Co., Ltd. | pH adjuster | 1.04 |
| Deionized water | - | water | 180.35 |
| Propylene glycol monobutyl ether | - | solvent | 72.01 |
| Iriodin 9225 Rutile Blue Pearl SW | Merck | luster pigment | 57.74 |

**[Table 12]**

| Table 12 Pigment paste (P-2) for second aqueous coloring paint | | | |
|---|---|---|---|
| Material | Source | Component | Formulation amount/part |
| RAVEN 5000 ULTRA III | Birla Carbon | black pigment | 21.00 |
| Deionized water | - | water | 99.50 |
| DISPARLON AQ-380 | Kusumoto Chemicals, Ltd. | dispersant | 28.00 |
| Surface control agent sample E27 | - | surface control agent | 1.48 |

### (Preparation of First Aqueous Coloring Paint)

A water-soluble acrylic resin, a white pigment, a black pigment, a solvent, water, a dispersant and a surface control agent of surface control agent sample E27 were added in a vessel in the formulation amount shown in Table 10, and zirconia beads were added to the mixture of these materials, which was then dispersed for 60 minutes using a paint shaker to prepare a first aqueous coloring paint pigment paste (P-1). After the dispersion was completed, the zirconia beads were removed. Next, a water-soluble acrylic resin, an iminomethylated melamine resin, water, a pH adjuster, a solvent and a surface control agent of surface control agent sample E27 were sequentially added to the pigment paste (P-1) in the formulation amount shown in Table 9, and mixed using a lab disperser to obtain a first aqueous coloring paint (BC-1).

### (Preparation of Second Aqueous Coloring Paint)

A black pigment, water, a dispersant and a surface control agent of surface control agent sample E27 were blended in a vessel in the formulation amount shown in Table 12, and zirconia beads were added to the mixture of these materials, which was then dispersed for 60 minutes using a paint shaker to prepare a second aqueous coloring paint pigment paste (P-2). After the dispersion was completed, the zirconia beads were removed. Next, an acrylic polyol dispersion, an acrylic-modified urethane dispersion, an iminomethylated melamine resin, a rheology control agent, a pH adjuster, water, a solvent and a luster pigment were sequentially added to the pigment paste (P-2) in the formulation amount shown in Table 11, and mixed using a lab disperser to obtain a second aqueous coloring paint (BC-2).

### (Preparation of Clear Paint)

First, a resin to be blended in a clear paint was synthesized as follows.

### <Synthesis of Hydroxyl Group-Containing Acrylic Resin (C-1)>

330.0 parts of ethyl 3-ethoxypropionate were charged into a 2,000 ml reaction vessel equipped with a stirrer, a reflux condenser, a dropping device, a thermometer and a nitrogen gas introduction tube. Then, while stirring under a nitrogen gas flow, the internal temperature was raised to 155°C. A mixture consisting of 290.4 parts of hydroxypropyl acrylate (trade name HPA: manufactured by Osaka Organic Chemical Industry Ltd.), 88.0 parts of polypropylene glycol monomethacrylate (trade name BLEMMER PP-1000: manufactured by NOF Corporation), 88.0 parts of isobornyl acrylate (trade name IBXA: manufactured by Osaka Organic Chemical Industry Ltd.), 44.0 parts of 2-hydroxyethyl methacrylate (trade name Acryester HO: manufactured by Mitsubishi Chemical Corporation), 44.0 parts of 2-hydroxyethyl acrylate, 176.0 parts of styrene, 132.0 parts of methyl methacrylate (trade name Acryester M: manufactured by Mitsubishi Chemical Corporation), 17.6 parts of methacrylic acid, and 36.96 parts of di-t-amyl peroxide (trade name Luperox DTA: manufactured by ARKEMA Yoshitomi, Ltd.) were provided in the dropper as a dropping solution. Next, while maintaining the internal temperature of the reaction vessel at 155°C, the above dropping solution was uniformly added dropwise over a period of 240 minutes. After the dropping was completed, the reaction temperature was maintained for 120 minutes to perform the reaction. After the reaction was completed, the internal temperature of the reaction vessel was lowered to 100°C, and then 259.6 parts of butyl acetate was added. The resin solid content was adjusted to 60% with ethyl 3-ethoxypropionate/butyl acetate (56/44) to thereby obtain a hydroxyl group-containing acrylic resin (C-1). The weight-average molecular weight of the synthesized hydroxyl group-containing acrylic resin was 5,500 (hydroxyl value: 200 mgKOH/g, SP value: 11.0).

### <Preparation of Clear Paint>

Next, an isocyanate curing agent, a diluent and a surface control agent (leveling agent) were sequentially added to the hydroxyl group-containing acrylic resin (C-1) in the formulation amount shown in Table 13, and mixed using a lab disperser to obtain a clear paint.

**[Table 13]**

| Table 13 Formulation of clear paint | | | |
|---|---|---|---|
| Material | Source | Component | Formulation amount/part |
| Acrylic resin containing hydroxyl group (C-1) | - | acrylic resin (resin solid content 60%) | 67.00 |
| Sumidur N3300 | Covestro | isocyanate curing agent | 33.00 |
| Ethyl 3-ethoxypropionate/butyl acetate = 56/44 | - | diluent | 22.00 |
| DISPARLON LHP-95 | Kusumoto Chemicals, Ltd. | surface control agent | 0.10 |

### [Evaluation Method]

Using the first aqueous coloring paint, the second aqueous coloring paint and the clear paint obtained as described above, evaluation tests were performed as follows.

### (Evaluation of Anti-Popping Properties)

A multilayer coating film used for evaluating anti-popping properties (hereinafter, referred to as an "anti-popping evaluation coating film") was prepared, and the anti-popping properties were evaluated by observing the occurrence of popping in the anti-popping evaluation coating film. Details are described below.

### <Preparation of Anti-Popping Evaluation Coating Film>

A first aqueous coloring paint (BC-1) was applied to a glass plate using a wireless bar coater OSP-80, left to stand at room temperature for 5 minutes, and then preheated at 80°C for 5 minutes. Next, a second aqueous coloring paint, which was obtained by adding a predetermined amount of a surface control agent of any of surface control agent samples E1 to E43 and C1 to C11 to the paint and dispersing using a disperser at 2,000 rpm for 5 minutes, was applied to the uncured coating film obtained with the first aqueous coloring paint using a 6 mil applicator, and left to stand at room temperature for 5 minutes, and then preheated at 80°C for 5 minutes. Further, a clear paint was applied to the uncured coating film obtained with the second aqueous coloring paint using a wireless bar coater OSP-80, left to stand at room temperature for 5 minutes, and then heated at 140°C for 30 minutes to simultaneously cure and dry the multilayer coating film, thereby obtaining anti-popping evaluation coating films of Examples 1 to 43 and Comparative Examples 1 to 11. Tables 14 and 15 show the surface control agent samples added to the second aqueous coloring paint when preparing the anti-popping evaluation coating films of examples and comparative examples. As shown in Table 15, a Blank evaluation coating film was also prepared in which no surface control agent was added to the second aqueous coloring paint when preparing the anti-popping evaluation coating film.

### <Method for Evaluating Anti-Popping Evaluation Coating Film>

The occurrence of popping in the anti-popping evaluation coating films of Examples 1 to 43, Comparative Examples 1 to 11 and Blank obtained as described above was visually inspected and evaluated in four grades according to the following criteria.
A (excellent): No popping was visible in the coating film
B (good): A few instances of popping were visible in the coating film
C (fair): Popping was visible in part of the coating film
D (poor): Popping was visible across the entire coating film

### (Evaluation of Overcoatability)

A multilayer coating film used for evaluating overcoatability (hereinafter, referred to as an "overcoatability evaluation coating film") was prepared, and the overcoatability was evaluated by observing the coating film appearance of the overcoatability evaluation coating film. Details are described below.

### <Preparation of Overcoatability Evaluation Coating Film>

A first aqueous coloring paint (BC-1) was applied to a SPCC-SD electrodeposition coated plate (manufactured by Paltec Co., Ltd.) using a wireless bar coater OSP-80 and an automatic film applicator AFA-standard (manufactured by TQC Sheen), left to stand at room temperature for 5 minutes, and then preheated at 80°C for 5 minutes. Next, a second aqueous coloring paint, which was obtained by adding a surface control agent of any of surface control agent samples E1 to E43 and C1 to C11 to the paint, dispersing using a disperser at 2,000 rpm for 5 minutes, and then defoaming using a defoaming device, was applied to the uncured coating film obtained with the first aqueous coloring paint using a wireless bar coater OSP-80, and left to stand at room temperature for 5 minutes, and then preheated at 80°C for 5 minutes. Further, a clear paint was applied to the uncured coating film obtained with the second aqueous coloring paint using a wireless bar coater OSP-80, left to stand at room temperature for 5 minutes, and then heated at 140°C for 30 minutes to simultaneously cure and dry the multilayer coating film, thereby obtaining overcoatability evaluation coating films of Examples 1 to 43 and Comparative Examples 1 to 11. Tables 14 and 15 show the surface control agent samples added to the second aqueous coloring paint when preparing the overcoatability evaluation coating films of examples and comparative examples. As shown in Table 15, a Blank evaluation coating film was also prepared in which no surface control agent was added to the second aqueous coloring paint when preparing the overcoatability evaluation coating film.

### <Method for Evaluating Overcoatability Evaluation Coating Film>

The coating film appearance of the overcoatability evaluation coating films of Examples 1 to 43, Comparative Examples 1 to 11 and Blank obtained as described above was visually inspected and evaluated in four grades according to the following criteria.
A (excellent): The appearance of the coating film was good
B (good): The smoothness of the coating film was slightly inferior
C (fair): Cratering or foreign substances were found in part of the coating film
D (poor): Cissing or foreign substances were found across the entire coating film

### [Evaluation Results]

Tables 14 and 15 show the results of evaluating the performance as described above.

**[Table 14]**

| Table 14 Evaluation Results for Multilayer Coating Films (Examples 1 to 43) | | | | |
|---|---|---|---|---|
| | Surface control agent sample No. | Addition amount (%) | Anti-popping properties | Overcoatability |
| Example 1 | E1 | 1 | A | A |
| Example 2 | E2 | 1 | B | A |
| Example 3 | E3 | 1 | A | A |
| Example 4 | E4 | 1 | A | B |
| Example 5 | E5 | 1 | B | A |
| Example 6 | E6 | 1 | B | A |
| Example 7 | E7 | 1 | B | A |
| Example 8 | E8 | 1 | B | A |
| Example 9 | E9 | 1 | B | A |
| Example 10 | E10 | 1 | C | A |
| Example 11 | E11 | 1 | C | C |
| Example 12 | E12 | 1 | A | A |
| Example 13 | E13 | 1 | B | B |
| Example 14 | E14 | 1 | C | A |
| Example 15 | E15 | 1 | C | A |
| Example 16 | E16 | 1 | A | B |
| Example 17 | E17 | 1 | B | B |
| Example 18 | E18 | 1 | C | A |
| Example 19 | E19 | 1 | B | A |
| Example 20 | E20 | 1 | C | A |
| Example 21 | E21 | 1 | B | B |
| Example 22 | E22 | 1 | C | A |
| Example 23 | E23 | 1 | B | A |
| Example 24 | E24 | 1 | C | B |
| Example 25 | E25 | 1 | B | A |
| Example 26 | E26 | 1 | B | B |
| Example 27 | E27 | 1 | B | A |
| Example 28 | E28 | 1 | B | A |
| Example 29 | E29 | 1 | C | A |
| Example 30 | E30 | 1 | B | A |
| Example 31 | E31 | 1 | C | A |
| Example 32 | E32 | 1 | C | A |
| Example 33 | E33 | 1 | C | A |
| Example 34 | E34 | 1 | A | A |
| Example 35 | E35 | 1 | B | A |
| Example 36 | E36 | 1 | C | A |
| Example 37 | E37 | 1 | A | A |
| Example 38 | E38 | 1 | B | A |
| Example 39 | E39 | 1 | C | B |
| Example 40 | E40 | 1 | B | A |
| Example 41 | E41 | 1 | B | A |
| Example 42 | E42 | 1 | B | A |
| Example 43 | E43 | 1 | A | A |

| | | | | |
|---|---|---|---|---|
| *The surface control agent used in each Example was common to the anti-popping evaluation coating film and the overcoatability evaluation coating film. | | | | |

**[Table 15]**

| Table 15 Evaluation Results for Multilayer Coating Films (Comparative Examples 1 to 11 and Blank) | | | | |
|---|---|---|---|---|
| | Surface control agent sample No. | Addition amount (wt%) | Anti-popping properties | Overcoatability |
| Comparative Example 1 | C1 | 1 | D | A |
| Comparative Example 2 | C2 | 1 | D | C |
| Comparative Example 3 | C3 | 1 | D | B |
| Comparative Example 4 | C4 | 1 | D | A |
| Comparative Example 5 | C5 | 1 | D | A |
| Comparative Example 6 | C6 | 1 | D | A |
| Comparative Example 7 | C7 | 1 | B | D |
| Comparative Example 8 | C8 | 1 | D | A |
| Comparative Example 9 | C9 | 1 | D | A |
| Comparative Example 10 | C10 | 1 | B | D |
| Comparative Example 11 | C11 | 1 | D | D |
| Blank | no surface control agent added | - | D | A |

| | | | | |
|---|---|---|---|---|
| *The surface control agent used in each Comparative Example was common to the anti-popping evaluation coating film and the overcoatability evaluation coating film. | | | | |

The multilayer coating films of Examples 1 to 43 (anti-popping evaluation coating films and overcoatability evaluation coating films) had the performance required by the present invention in terms of both anti-popping properties and overcoatability.

From Examples 1, 12 to 17, 19 to 21, 23, 25, 26, 27, 30, 31, 33, 43, and the like, the anti-popping properties and overcoatability are found to be particularly excellent when polyalkylene glycols and derivatives thereof, polyalkyl acrylates, poly(alkyl vinyl ether), polybutene, polyglycerol fatty acid esters or the like are used as the polymer (A).

Further, from Examples 1 to 7, 10 and 11, the anti-popping properties and overcoatability are found to be particularly excellent when the aspect ratio of the organic solid fine particles (B) is within the range of 1.5 to 30.

On the other hand, Comparative Examples 1 to 3 and 9, which contained no organic solid fine particles (B) as the surface control agent component, and Comparative Example 4, which contained no polymer (A), were all inferior in anti-popping properties.

Further, Comparative Examples 5 to 8, which contained, as the polymer, a polymer (non-A component) that does not corresponding to the polymer (A) of the present invention, were inferior in either anti-popping properties or overcoatability. In particular, Comparative Example 7, which contained a silicone compound as the polymer, was excellent in anti-popping properties but inferior in overcoatability.

Further, Comparative Example 10, which contained hydrophobic silica fine particles as the surface control agent component, and Comparative Example 11, which contained silicone and hydrophobic fine particles, were inferior in overcoatability. Furthermore, Comparative Example 11, which contained silicone and hydrophobic fine particles, was also inferior in anti-popping properties.

## Claims

1. A surface control agent for aqueous paints, the surface control agent comprising:
a polymer (A) having an SP value of 6 to 12 and a weight-average molecular weight of 200 to 1,000,000 and having at least three repeating units; and
organic solid fine particles (B) which are in a solid state in the surface control agent at 25°C.

2. The surface control agent according to claim 1, wherein
the polymer (A) is one or more polymers selected from the group consisting of poly(alkyl vinyl ether), polybutadienes, polybutenes, polyalphaolefins, polyalkyl (meth)acrylates, dibasic acid ester copolymers, poly(fatty acid vinyl esters), polyalkylene glycols and derivatives thereof, polyamides, polyglycerol fatty acid esters, and polyesters.

3. The surface control agent according to claim 1, wherein
the organic solid fine particles (B) are one or more solid fine particles selected from the group consisting of amide, urea, polyethylene, oxidized polyethylene, acid-modified polyethylene, ethylene vinyl acetate copolymer, ethylene (meth)acrylic acid copolymer, polypropylene, acid-modified polypropylene, and hydrogenated castor oil.

4. The surface control agent according to claim 3, wherein
the amide is a fatty acid diamide obtained by reacting fatty acids with diamines, the fatty acids being selected from the group consisting of alkyl fatty acids and hydroxy fatty acids and including at least one hydroxy fatty acid, the diamines including one or more diamines selected from the group consisting of alkylenediamines having 2 to 6 carbon atoms and m-xylylenediamine.

5. The surface control agent according to claim 1, wherein
the crystals of the organic solid fine particles (B) have an aspect ratio of 1.1 to 100.

6. The surface control agent according to claim 1, wherein
the organic solid fine particles (B) have a mode diameter of 0.1 µm to 150 µm.

7. The surface control agent according to claim 1, further comprising an organic medium (C), other than water, that is liquid at 25°C, wherein
the organic medium (C) has 0 to 2 repeating units.

8. The surface control agent according to claim 7, wherein
the organic medium (C) is one or more organic media selected from the group consisting of hydrocarbon oils, alcohols, glycol ethers, glycol esters and polyhydric alcohol fatty acid esters.

9. An aqueous paint composition comprising:
the surface control agent according to any one of claims 1 to 8; and
an aqueous resin.

10. An article coated with a coating agent containing the surface control agent according to any one of claims 1 to 8.

11. A method for forming a multilayer coating film, the method comprising a film-formation step in which two or more aqueous paints are sequentially applied to a surface of an object to be coated by a wet-on-wet process, and then the aqueous paints applied to the object to be coated are simultaneously heated and cured to thereby form two or more coating films, wherein
at least one of the two or more aqueous paints contains the surface control agent according to any one of claims 1 to 8.

12. The method for forming a multilayer coating film according to claim 11, wherein
a first aqueous paint containing a coloring pigment and a second aqueous paint containing a luster pigment are used as the two or more aqueous paints,
at least one of the first aqueous paint and the second aqueous paint contains the surface control agent, and
in the film-formation step, the first aqueous paint, the second aqueous paint and a clear paint are sequentially applied by a wet-on-wet process, and then the first aqueous paint, the second aqueous paint and the clear paint are simultaneously heated and cured to thereby form, on a surface of the object to be coated, a first aqueous resin coating film, a second aqueous resin coating film and a clear coating film laminated in this order from the side of the object to be coated.
